# EUROPEAN PATENT APPLICATION

(11) **EP 2 779 564 A1**
(43) Date of publication of application: **17.09.2014**
(21) Application number: 12847623.1
(22) Date of filing: 07.11.2012
(51) Int. Cl.: H04L 29/06

(54) **METHOD AND SYSTEM FOR AUTHENTICATING USER'S IDENTITY AND EQUIPMENT USED THEREIN**

(30) Priority: 08.11.2011 CN 201110358242
(71) Applicant: Chan, Ka Yin Victor, Macau (CN)
(72) Inventor: Chan, Ka Yin Victor, Macau (CN)
(74) Representative: Modiano, Micaela Nadia
(86) International application number: PCT/CN2012/084224
(87) International publication number: WO 2013/067935

(57) **Abstract**

The present invention relates to a method and system for authenticating user identity with a user terminal, authentication front-end computer system, and authentication server. In a first scheme, the user terminal transmits an authentication instruction comprising an authentication message to the authentication front-end computer system. Then, the authentication front-end computer system transmits an authentication request comprising the authentication message to a specific authentication server. In a second scheme, the user terminal transmits an authentication request comprising an authentication message to a specific authentication server. In any schemes, after receiving the authentication request, the authentication server authenticates a user's identity according to the authentication message. Preferably, the authentication server transmits an authentication result to the authentication front-end computer system. When a user pays a certain amount of money to an operator, the authentication server transfers the specific amount from a specific user payment account to a specific operator account after successful authentication.

## Description

### TECHNICAL FIELD

This invention relates to the technical field of information security, in particular, a method and a system for authenticating user identity. This invention further relates to a user terminal, an authentication server and an authentication front-end computer system used in the method and system.

### BACKGROUND ART

With the development of information technology, electronic commerce has been increasingly pervasive in people's lives. The popularity of electronic commerce often calls for the authentication of user identities. Given the existing technology, there are two major types of applications involving the authentication of user identities, in particular the authentication of mobile users' identities: electronic payment mechanisms and electronic ticketing mechanisms (for the authentication of such tickets as admission tickets, membership cards, staff cards, entry permits, time cards of time clocks or payroll recorders, student cards, library borrowers' cards and other documents).

Through electronic payment mechanisms, users can easily accomplish a variety of payments. The myriad of existing electronic payment mechanisms can roughly be classified into the following categories:
a1. Payment cards: They include credit cards, charge cards, debit cards, etc. A payment card usually stores on its magnetic strip and/or microchip information about the card itself and its cardholder, for example, the payment card number, the effective dates, the cardholder's name, the card security code, etc. Sometimes, the cardholder is required to sign in advance on the payment card, providing a signature specimen. When a payment card's cardholder pays an amount payable to a physical merchant, the merchant will use related specialized apparatus, such as a point-of-sale machine, to read and record the information about the payment card and its cardholder so as to identify the payment card. In addition, the merchant may also require the payment card's cardholder to input a pre-registered password so as to authenticate the payment card's cardholder. The merchant may also require the payment card's cardholder to sign on a paper receipt for authentication. When a payment card's cardholder pays an online merchant, he/she is required to input on the merchant's webpage the amount payable and the information about the payment card, for example, the password, etc. The merchant receives the cardholder's amount payable from the payment card's operator (i.e., the card issuer).
a2. Smart cards and stored-value cards: They are physical cards storing data on their microchips and magnetic strips respectively. The stored data includes, for example, the monetary amount in the card. When making payment, a merchant rewrites the monetary amount in the card through a smart card reader or stored-value card reader, deducting the amount payable by the user. In addition, the merchant receives the amount payable by the user from the smart card or stored-value card operator (i.e., the card issuer). In the cases of some variants, the microchips of the above smart cards can, for example, be embedded in mobile phones, becoming Near Field Communication (NFC) apparatus upon adaptation.
a3. E-micropayment and payment service providers: A user pre-registers with an e-micropayment operator or payment service provider a user name, a password, and a bank account(s)/payment card account(s)/other account(s) that the user is entitled to operate. A merchant pre-registers with the e-micropayment operator or payment service provider a bank account(s)/other account(s) that the merchant is entitled to operate and obtains the merchant's unique identifier.
   When making payment to the merchant, the user inputs on the webpage of the e-micropayment operator or payment service provider the above user name and password, the amount payable, the merchant's identifier, etc. In fact, the e-micropayment operator or payment service provider makes payment by transferring from the user's registered bank account/payment card account/other account to the merchant's registered bank account/other account.
a4. E-checking: When making payment, a payer inputs on a bank's webpage a user name pre-registered with the bank, a password pre-registered with the bank, a checking account with the bank that the payer is entitled to operate, the amount payable, the payee's identifier, etc. The bank will effect a transfer according to the information inputted by the payer.
a5. E-cash: It is electronic messages that can be exchanged for such traditional cash as banknotes. When paying an online merchant, a user sends the related electronic message(s) to the merchant.
a6. Mobile payment: When paying a merchant, a user sends message(s) of specific format(s) from his/her mobile phone. Such message(s) identifies the merchant and comprises the amount payable. The telecommunication carrier of the user's mobile phone pays the amount payable to the merchant on the user's behalf and recovers this amount payable from the user as part of the telecommunication charges later on. There is a variant, which is similar to category a3 above. The variant differs in that the input process is conducted through application software or apps on mobile apparatus instead of webpages, and the password(s) is usually for accessing the application software or apps but is not pre-registered with the operator. There are other variants.

The above technical solutions of electronic payment systems have the following weaknesses in real-world applications:
1. For the electronic payment mechanisms in categories a1 and a2 above, the user (i.e., the cardholder) and the merchant must have affiliated themselves with the same card operator and payment requires specialized apparatus, leading to the card operator's monopoly and inflating the card operator's charges. In addition, for a card operator operating only in specific region(s), problems arise when its cardholders pay merchants located in other region(s).
2. The electronic payment mechanisms in categories a1 and a2 above rely on a physical card owned by a user to identify the user. The card is prone to theft and the security is not high.
3. The electronic payment mechanisms in category a2 above apply only to payments to physical merchants but not usually online merchants.
4. When paying physical merchants using the electronic payment mechanisms in categories a1 and a2 above, a user must carry a physical card. If the user needs to pay using different electronic payment mechanisms and/or the same electronic payment mechanism operated by different card operators, he/she must carry multiple physical cards accordingly, giving rise to extreme inconvenience and/or risk of loss.
5. The electronic payment mechanisms in categories a3, a4, and a5 above apply only to payment for online transactions but not usually to payment to physical merchants.
6. For the electronic payment mechanisms in categories a1, a3, and a4 above and those of the variants of category a6 above, since passwords need to be inputted in merchants' apparatus or on merchants' webpages, the passwords are susceptible to theft, for example, through installing malicious software on the computer for such password input. Especially, when the computer used is public or semi-public, the chance of malicious software being installed is even higher, and thus is the chance of passwords being stolen. Also, the operation of these categories is time-consuming.
7. For the electronic payment mechanisms in categories a2, a4, and a6 above, their operators are usually confined to specific regions, resulting in limited globalization.
8. When using the electronic payment mechanisms in category a6 above, users usually need access to mobile phone data networks, which is not only high-cost but also complicated, especially during mobile phone roaming. Moreover, for some variants of this category, passwords are usually used to access application software or apps and are not pre-registered with operators, so the security is not high.

In electronic commerce, there are different existing categories of electronic ticketing mechanisms, for example, b1. printed paper tickets, b2. electronic tickets (e.g., a physical card storing ticket data on their microchips and/or magnetic strips), b3. identification codes representing tickets, and b4. combinations of user names and passwords, etc. A ticket is usually given by an operator (e.g., a merchant) to a user so as to prove that the operator gives the user one or more rights and/or identities. For categories b1, b2, and b3, the operator verifies a ticket manually or using related reader(s) when the user exercises the ticket after obtaining the ticket. In some cases, the operator also verifies the user's personal information so as to ascertain the validity of the ticket. Category b4 is more commonly used, for example, on paid website.

The above technical solutions of electronic ticketing mechanisms have the following weaknesses:
Categories b1, b2, and b3 adopt manual verification, which is time-consuming, high-cost, and vulnerable to human errors and frauds. Also, the tickets or identification codes are prone to forgery and unauthorized use and are unsecure. They are generally not suitable for online merchants. For categories b1 and b2, if a user needs to exercise multiple tickets, he/she needs to carry multiple paper tickets and electronic tickets correspondingly, causing extreme inconvenience and/or risk of loss. In addition, the paper tickets of category b1 are environment-unfriendly. The operation of category b4 is time-consuming and susceptible to mistakes and password-stealing by malicious software, etc.

Therefore, in the context of the existing technologies, a new method for authenticating user identify is urgently needed to avoid the technical weaknesses of the various solutions above.

### SUMMARY OF THE INVENTION

The technical problems that the present invention aims to solve is to provide a method and a system for authenticating user identity (especially mobile user identity), which can overcome all the above weaknesses of the existing technologies and to provide a user terminal, an authentication server and an authentication front-end computer system used in the method and system.
According to one aspect of the present invention, a method for authenticating user identity is provided. The presently claimed method comprises the following steps:
transmitting from a user terminal to an authentication front-end computer system an authentication instruction comprising an authentication message, and
transmitting from the authentication front-end computer system to a specific authentication server an authentication request comprising the authentication message, or
transmitting from a user terminal to a specific authentication server an authentication request comprising an authentication message, and
authenticating user identity by the authentication server according to the authentication message.

Preferably, the method further comprises:
transmitting an authentication result by the authentication server to the authentication front-end computer system, and/or transmitting the authentication result by the authentication server to the user terminal directly or through the authentication front-end computer system as an intermediate node.

Preferably, the authentication instruction comprises the identifier of the specific authentication server in order to identify the specific authentication server.

Preferably, the method further comprises:
before transmitting the authentication message, encrypting the authentication message by the user terminal,
having pre-registered in the authentication server a decryption key used to decrypt the encrypted authentication message, and
after receiving the authentication message, conducting an authentication message decryption process by the authentication server, wherein the authentication message decryption process comprises:
   using the decryption key to decrypt the authentication message.

Preferably, the authentication message further comprises a user identifier used to identify a user whose identity is to be authenticated, and the method further comprises:
before transmitting the authentication message, encrypting the part/parts of the authentication message other than the user identifier by the user terminal,
having associated an user identifier/identifiers and an decryption key/keys used to decrypt the encrypted part/parts of an authentication message/messages with each other and pre-registered them in the authentication server, and
after receiving the authentication message, conducting an authentication message decryption process by the authentication server, wherein the authentication message decryption process comprises:
   based on the received user identifier, searching the authentication server for the corresponding decryption key used for decryption,
   wherein if the search fails, the authentication fails, or
   if the search succeeds, the encrypted part/parts of the authentication message is/are decrypted using the decryption key so retrieved.

Preferably, the method further comprises:
before transmitting the authentication message, generating a digital signature using a private key by the user terminal and incorporating the said digital signature into the authentication message, wherein the digital signature is used to verify data integrity of the part/parts of the authentication message other than the digital signature,
having pre-registered in the authentication server a public key used to verify data integrity of the part/parts of the authentication message other than the digital signature,
after receiving the authentication message, verifying data integrity of the part/parts of the authentication message other than the digital signature using the public key and the received digital signature by the authentication server,
wherein if it is verified that the data integrity is not maintained, the authentication fails, or
if it is verified that the data integrity is maintained, a time verification step/steps and/or a duplication verification step/steps and/or a rolling code verification step/steps is/are conducted.

Preferably, the authentication message further comprises a user identifier, which is used to identify the user whose identity is to be authenticated, and the method further comprises:
before transmitting the authentication message, generating a digital signature using a private key by the user terminal and incorporating the said digital signature into the authentication message, wherein the digital signature is used to verify data integrity of the part/parts of the authentication message other than the digital signature or the part/parts of the authentication message other than the digital signature and the user identifier,
having associated with each other and pre-registered in the authentication server a user identifier/identifiers and a public key/keys used to verify data integrity of the part/parts of an authentication message/messages other than a digital signature/signatures or the part/ parts of an authentication message/messages other than a digital signature/signatures and a user identifier/identifiers,
after receiving the authentication message, searching the authentication server by itself for the corresponding public key for verification based on the received user identifier,
wherein if the search fails, the authentication fails, or
if the search succeeds, the method further comprises:
   verifying data integrity of the part/parts of the authentication message other than the digital signature or the part/parts of the authentication message other than the digital signature and the user identifier using the public key so retrieved and the received digital signature by the authentication server,
   wherein if it is verified that the data integrity is not maintained, the authentication fails, or
   if it is verified that the data integrity is maintained, a time verification step/steps and/or a duplication verification step/steps and/or a rolling code verification step/steps is/are conducted.

Preferably, the encryption key used for encryption comprises a first part and/or a second part, wherein the first part is pre-stored in the user terminal, and the second part is information or a hash of information inputted into the user terminal by the user before the user terminal conducts encryption.

Preferably, the private key used to generate the digital signature comprises a first part and/or a second part, wherein the first part is pre-stored in the user terminal, and the second part is information or a hash of information inputted into the user terminal by the user before the user terminal generates the digital signature.

Preferably, the method further comprises:
before encrypting, incorporating by the user terminal time of the authentication message's generation into the authentication message.

Preferably, after conducting the authentication message decryption process, the method further comprises:
comparing the time incorporated into the authentication message with the current time in the authentication server by the authentication server,
wherein if the time difference is greater than a predetermined threshold, the authentication fails, or
if the time difference is not greater than the predetermined threshold, the authentication succeeds.

Preferably, the method further comprises:
before generating the digital signature, incorporating by the user terminal time of the authentication message's generation into the authentication message.

Preferably, the time verification step/steps comprise:
comparing the time incorporated into the authentication message with the current time in the authentication server by the authentication server,
wherein if the time difference is greater than a predetermined threshold, the authentication fails, or
if the time difference is not greater than the predetermined threshold, the authentication succeeds.

Preferably, the method further comprises:
storing by the authentication server the authentication message in the authentication request received each time,
after conducting the authentication message decryption process, comparing by the authentication server the authentication message/messages previously received with the authentication message currently received,
wherein if at least one of the authentication message/messages previously received is identical to the authentication message currently received, the authentication fails, or
if none of the authentication message/messages previously received is identical to the authentication message currently received, the authentication succeeds.

Preferably, the method further comprises:
storing by the authentication server the authentication message in the authentication request received each time,
and the duplication verification step/steps comprise:
comparing by the authentication server the authentication message/messages previously received with the authentication message currently received,
wherein if at least one of the authentication message/messages previously received is identical to the authentication message currently received, the authentication fails, or
if none of the authentication message/messages previously received is identical to the authentication message currently received, the authentication succeeds.

Preferably, the method further comprises:
storing by the authentication server the authentication message in the authentication request received each time,
after conducting the authentication message decryption process, comparing by the authentication server the time incorporated into the authentication message with the current time in the authentication server,
wherein if the time difference is greater than a predetermined threshold, the authentication fails, or
if the time difference is not greater than the predetermined threshold, the authentication server compares the authentication message/messages previously received with the authentication message currently received, and
wherein if at least one of the authentication message/messages previously received is identical to the authentication message currently received, the authentication fails, or
if none of the authentication message/messages previously received is identical to the authentication message currently received, the authentication succeeds.

Preferably, the method further comprises:
storing by the authentication server the authentication message in the authentication request received each time,
and the time verification step/steps comprise:
   comparing by the authentication server the time incorporated into the authentication message with the current time in the authentication server,
   wherein if the time difference is greater than a predetermined threshold, the authentication fails, or
   if the time difference is not greater than the predetermined threshold, the duplication verification step/steps is/are conducted, wherein the duplication verification step/steps comprise:
      comparing by the authentication server the authentication message/messages previously received with the authentication message currently received,
      wherein if at least one of the authentication message/messages previously received is identical to the authentication message currently received, the authentication fails, or
      if none of the authentication message/messages previously received is identical to the authentication message currently received, the authentication succeeds.

Preferably, the user terminal generates the authentication message at predetermined intervals until receiving the user's command to transmit the authentication instruction comprising the most recently generated authentication message to the authentication front-end computer system or transmit the authentication request comprising the most recently generated authentication message to the authentication server, wherein the authentication message generated each time comprises the time of the corresponding authentication message's generation.

Preferably, a stored authentication message is deleted from the authentication server when the time incorporated into the corresponding authentication message stored in the authentication server is earlier than the current time in the authentication server by more than the predetermined threshold.

Preferably, the method further comprises:
before encrypting, incorporating by the user terminal a rolling code into the authentication message,
after conducting the authentication message decryption process, comparing by the authentication server the rolling code incorporated into the authentication message with the corresponding rolling code/codes generated by the authentication server,
wherein if the rolling code incorporated into the authentication message is not equal to any corresponding rolling code generated by the authentication server, the authentication fails, or
if the rolling code incorporated into the authentication message is equal to at least one corresponding rolling code generated by the authentication server, the authentication succeeds.

Preferably, the method further comprises:
before generating the digital signature, incorporating by the user terminal a rolling code into the authentication message,
and the rolling code verification step/steps comprise:
comparing by the authentication server the rolling code incorporated into the authentication message with the corresponding rolling code/codes generated by the authentication server,
wherein if the rolling code incorporated into the authentication message is not equal to any corresponding rolling code generated by the authentication server, the authentication fails, or
if the rolling code incorporated into the authentication message is equal to at least one corresponding rolling code generated by the authentication server, the authentication succeeds.

Preferably, the method further comprises:
incorporating by the user terminal a rolling code into the authentication message,
after receiving the authentication message, comparing by the authentication server the rolling code incorporated into the authentication message with the corresponding rolling code/codes generated by the authentication server,
wherein if the rolling code incorporated into the authentication message is not equal to any corresponding rolling code generated by the authentication server, the authentication fails, or
if the rolling code incorporated into the authentication message is equal to at least one corresponding rolling code generated by the authentication server, the authentication succeeds.

Preferably, the authentication message further comprises a user identifier, which is used to identify the user whose identity is to be authenticated, and the authentication message further comprises user identity information according to which the user's identity can be authenticated, and the method further comprises:
incorporating by the user terminal the user identity information into the authentication message,
having associated a user identifier/identifiers and user identity information with each other and pre-registered them in the authentication server,
after receiving the authentication message, searching the authentication server by itself for the corresponding user identity information based on the received user identifier, and
comparing the user identity information so retrieved with the received user identity information,
wherein if at least one piece of user identity information so retrieved is identical to the received user identity information, the authentication succeeds, otherwise, the authentication fails.

Preferably, the method further comprises:
if the authentication succeeds, a specific amount is paid from a specific user payment account to a specific operator account.

Preferably, the authentication message further comprises user identity information, which in turn comprises a user payment account identifier for identifying the specific user payment account.

Preferably, the method further comprises:
pre-registering a user payment account identifier in the authentication server; and
after currently receiving the authentication message, using the user payment account identifier to identify the specific user payment account by the authentication server.

Preferably, the authentication message further comprises a user identifier for identifying the user whose identity is to be authenticated, and the method further comprises:
having associated a user identifier/identifiers and a user payment account identifier/identifiers with each other and pre-registered them in the authentication server; and
after currently receiving the authentication message, searching the authentication server by itself for the corresponding user payment account identifier for identifying the specific user payment account, based on the received user identifier.

Preferably, the authentication message or authentication request further comprises an operator account identifier for identifying the specific operator account.

Preferably, the authentication message or authentication request further comprises an operator identifier, and the method further comprises:
having associated an operator identifier/identifiers and an operator account identifier/identifiers with each other and pre-registered them in the authentication server; and
after currently receiving the authentication request, searching the authentication server by itself for the corresponding operator account identifier for identifying the specific operator account, based on the operator identifier currently received.

Preferably, the method further comprises:
pre-registering an operator account identifier in the authentication server; and
after currently receiving the authentication request, using the operator account identifier to identify the specific operator account by the authentication server.

Preferably, the authentication message or authentication request further comprises an amount which is the specific amount.

Preferably, the authentication message further comprises a user identifier for identifying the user whose identity is to be authenticated, and the method further comprises:
having associated a user identifier/identifiers and an amount/amounts with each other and pre-registered them in the authentication server; and
after currently receiving the authentication message, searching the authentication server by itself for the corresponding amount based on the user identifier currently received, wherein the amount so retrieved is the specific amount.

Preferably, the method further comprises:
pre-registering an amount in the authentication server,
wherein the amount so registered in the authentication server is the specific amount.

Preferably, the method further comprises:
before transmitting the authentication message from the user terminal to the authentication front-end computer system or the authentication server, displaying by the authentication front-end computer system the operator account identifier in a textual and/or machine-readable format; and
reading by the user or the user terminal the operator account identifier, which is to be incorporated into the authentication message.

Preferably, the method further comprises:
before transmitting the authentication message from the user terminal to the authentication front-end computer system or the authentication server, displaying by the authentication front-end computer system the operator identifier in a textual and/or machine-readable format; and
reading by the user or the user terminal the operator identifier in order to be incorporated into the authentication message.

Preferably, the method further comprises:
before transmitting the authentication message from the user terminal to the authentication front-end computer system or the authentication server, displaying by the authentication front-end computer system the amount to be incorporated into the authentication message in a textual and/or machine-readable format; and
reading by the user or the user terminal the amount to be incorporated into the authentication message in order to incorporate the said amount into the authentication message.

Preferably, the authentication message further comprises user identity information, and the user identity information comprises a ticket identifier for identifying at least one ticket to be exercised by the user.

Preferably, transmitting the authentication instruction from the user terminal to the authentication front-end computer system comprises:
displaying by the user terminal the authentication instruction in a textual and/or machine-readable format; and
reading by the authentication front-end computer system the textual and/or machine-readable format of the authentication instruction in order for the authentication front-end computer system to obtain the said authentication instruction.

Preferably, transmitting the authentication instruction from the user terminal to the authentication front-end computer system comprises:
displaying by the user terminal the authentication instruction in a textual format; and
inputting by the user the text of the authentication instruction into the authentication front-end computer system.

According to another aspect of the present invention, a user terminal is provided. The user terminal comprises:
an authentication message generator for generating an authentication message/messages; and
a transmitting device for transmitting an authentication instruction/instructions comprising the authentication message/messages to an authentication front-end computer system/systems or for transmitting an authentication request/requests comprising the authentication message/messages to an authentication server/servers.

Preferably, the user terminal further comprises:
a memory for storing a user identifier/identifiers, and/or storing user identity information, and/or storing an identifier/identifiers of an authentication server/servers, and/or storing an encryption key/keys or part/parts of the encryption key/keys for encryption, and/or storing a private key/keys or part/parts of the private key/keys for generation of a digital signature/signatures, and/or storing a user payment account identifier/identifiers, and/or storing a ticket identifier/identifiers.

Preferably, the authentication message generator further incorporates the user identifier stored in the memory into the authentication message, wherein the said user identifier is for identifying the user whose identity is to be authenticated.

Preferably, the authentication message generator further incorporates the user identity information stored in the memory into the authentication message in order to authenticate the user's identity according to the user identity information, or in order to incorporate a user payment account identifier or a ticket identifier into the user identity information, the user payment account identifier being used to identify the user payment account which is used by the user for payment, and the ticket identifier being used to identify at least one ticket to be exercised by the user.

Preferably, the authentication instruction or authentication request transmitted by the transmitting device further comprises the authentication server's identifier stored in the memory, which is used to identify the authentication server for authenticating the user's identity.

Preferably, the user terminal further comprises:
a real-time clock for generating real time to be incorporated into the authentication message/messages.

Preferably, the authentication message generator of the user terminal generates authentication messages at predetermined intervals until the user terminal receives the user's command to transmit the authentication instruction comprising the most recently generated authentication message to the authentication front-end computer system, wherein the authentication message generated each time comprises time of generation of the corresponding authentication message;
after receiving the command to transmit the authentication instruction, the transmitting device of the user terminal transmits the authentication instruction comprising the most recently generated authentication message to the authentication front-end computer system.

Preferably, the authentication message generator of the user terminal generates authentication messages at predetermined intervals until the user terminal receives the user's command to transmit the authentication request comprising the most recently generated authentication message to the authentication server, wherein the authentication message generated each time comprises time of generation of the corresponding authentication message;
after receiving the command to transmit the authentication request, the transmitting device of the user terminal transmits the authentication request comprising the most recently generated authentication message to the authentication server.

Preferably, the user terminal further comprises:
a rolling code generator for generating a rolling code/codes, which is to be incorporated into the authentication message/messages.

Preferably, the user terminal further comprises:
a user interface wherein the user inputs or chooses through the user interface a user identifier/identifiers, which is to be incorporated into the authentication message/messages, and/or the user inputs or chooses through the user interface a user payment account identifier/identifiers or a ticket identifier/identifiers, which is to be incorporated into the user identity information in the authentication message/messages, and/or the user inputs or chooses through the user interface an operator account identifier/identifiers or an operator identifier/identifiers, which is to be incorporated into the authentication message/messages, and/or the user inputs or chooses through the user interface an amount/amounts, which is to be incorporated into the authentication message/messages, and/or the user inputs or chooses through the user interface an authentication server's identifier/identifiers, which is to be incorporated into the authentication instruction/instructions or the authentication request/requests, and/or the user inputs through the user interface an encryption key/keys or part/parts of the encryption key/keys for encryption, and/or the user inputs through the user interface a private key/keys or part/parts of the private key/keys for generation of a digital signature/signatures, and/or the user inputs through the user interface a command/commands to transmit the authentication instruction/instructions or authentication request/requests.

Preferably, the authentication message generator further incorporates the user identifier, the user identity information, the operator account identifier or the operator identifier, and/or the amount into the authentication message,
wherein the user identifier is for identifying the user whose identity is to be authenticated;
the user identity information comprises the user payment account identifier or the ticket identifier, the user payment account identifier being used to identify the user payment account used by the user to pay, and the ticket identifier being used to identify at least one ticket to be exercised by the user;
the operator account identifier is for identifying the operator account of the operator receiving the user's payment; and
the operator identifier is for identifying the operator receiving the user's payment.

Preferably, the authentication instruction or authentication request transmitted by the transmitting device further comprises the authentication server's identifier, which is used to identify the authentication server for authenticating user identity.

Preferably, the authentication message generator further comprises:
an encryption unit for utilizing an encryption key/keys to encrypt the authentication message/messages to be transmitted.

Preferably, the authentication message generator further incorporates a user identifier into the authentication message, wherein the said user identifier is for identifying the user whose identity is to be authenticated, and the authentication message generator further comprises:
an encryption unit for utilizing at least one encryption key to encrypt the part/parts of the authentication message to be transmitted other than the user identifier at each time or at multiple times.

Preferably, the authentication message generator further comprises:
a digital signature generator for utilizing a private key/keys to generate a digital signature/signatures wherein the digital signature/signatures is/are to be incorporated into the authentication message/messages, and the digital signature/signatures is/are for verifying data integrity of the part/parts of the authentication message/messages other than the digital signature/signatures.

Preferably, the authentication message generator further incorporates a user identifier into the authentication message, wherein the user identifier is for identifying the user whose identity is to be authenticated, and the authentication message generator further comprises:
a digital signature generator for utilizing at least one private key to generate at least one digital signature at each time or at multiple times, wherein the digital signature is to be incorporated into the authentication message, and the digital signature is for verifying data integrity of the part/parts of the authentication message other than the digital signature or other than the digital signature and the user identifier.

Preferably, the user terminal further comprises a memory and/or a user interface wherein the encryption key comprises a first part and/or a second part, and wherein the first part is pre-stored in the memory, and the second part is the information inputted through the user interface into the user terminal by the user before the encryption unit performs encryption or the second part is such information's hash.

Preferably, the user terminal further comprises a memory and/or a user interface wherein the private key comprises a first part and/or a second part, and wherein the first part is pre-stored in the memory, and the second part is the information inputted through the user interface into the user terminal by the user before the digital signature generator generates the digital signature or the second part is such information's hash.

Preferably, the user terminal further comprises:
a hash generator for generating the hash from the information inputted through the user interface into the user terminal by the user.

Preferably, the transmitting device comprises:
a display unit for displaying in a textual and/or machine-readable format/formats the authentication instruction/instructions comprising the authentication message/messages, which is/are to be read by the authentication front-end computer system.

Preferably, the transmitting device comprises:
a non-contact communication transmitter for transmitting the authentication instruction/instructions comprising the authentication message/messages to the authentication front-end computer system through non-contact communication.

Preferably, the user terminal further comprises:
a receiver for directly receiving or using the authentication front-end computer system as an intermediate node to receive an authentication result/results from the authentication server.

According to another aspect of the present invention, an authentication server is provided. The authentication server comprises:
a receiver for receiving an authentication request/requests comprising an authentication message/messages from an authentication front-end computer system or a user terminal, and
an authentication unit for authenticating a user's/users' identity/identities according to the authentication message/messages.

Preferably, the authentication server further comprises:
a transmitter for transmitting an authentication result/results of the authentication unit to the authentication front-end computer system, and/or for directly transmitting or using the authentication front-end computer system as an intermediate node to transmit the authentication result/results to the user terminal.

Preferably, the authentication message is encrypted, and the authentication server further comprises:
a memory for pre-storing at least one decryption key for decrypting the encrypted authentication message, and the authentication unit further comprises:
   a decryption unit for utilizing at least one of the decryption key/keys to decrypt the encrypted authentication message at each time or at multiple times.

Preferably, the authentication message further comprises a user identifier, which is for identifying a user whose identity is to be authenticated, the part/parts of the authentication message other than the user identifier is/are encrypted, the authentication server further comprises:
a memory for pre-storing a user identifier/identifiers and the corresponding decryption key/keys for decrypting the encrypted part/parts of an authentication message/messages, and the authentication unit further comprises:
   a search unit for searching the memory for at least one of the corresponding decryption key/keys for decryption based on the user identifier in the received authentication message at each time or at multiple times; and
   a decryption unit for utilizing at least one of the decryption key/keys so retrieved to decrypt the encrypted part/parts of the received authentication message at each time or at multiple times.

Preferably, the authentication message further comprises a digital signature, and the authentication server further comprises:
a memory for pre-storing a public key for verifying data integrity of the part/parts of the authentication message/messages other than the digital signature/signatures, and the authentication unit further comprises:
   a verification unit for utilizing the public key and the digital signature/signatures to verify data integrity of the part/parts of the authentication message/messages other than the digital signature/signatures,
   wherein if it is verified that the data integrity is not maintained, the authentication fails, or
   if it is verified that the data integrity is maintained, the authentication server conducts a time verification step/steps and/or a duplication verification step/steps and/or a rolling code verification step/steps.

Preferably, the authentication message further comprises a user identifier, which is for identifying a user whose identity is to be authenticated, and a digital signature, and the authentication server further comprises:
a memory for pre-storing a user identifier/identifiers and the corresponding public key/keys for verifying data integrity of the part/parts of an authentication message/messages other than a digital signature/signatures or the part/parts of an authentication message/messages other than a digital signature/signatures and a user identifier/identifiers, and the authentication unit further comprises:
   a search unit for searching the memory for at least one of the corresponding public key/keys for verification based on the user identifier in the authentication message at each time or at multiple times, and
   a verification unit for utilizing at least one of the public key/keys so retrieved and the digital signature to verify data integrity of the part/parts of the authentication message other than the digital signature or the part/parts of the authentication message other than the digital signature and the user identifier at each time or at multiple times,
   wherein if it is verified that the data integrity is not maintained, the authentication fails at each time or if it is verified that the data integrity is not maintained, the authentications fail at multiple times, or,
   if it is verified that the data integrity is maintained, the authentication server conducts a time verification step/steps and/or a duplication verification step/steps and/or a rolling code verification step/steps.

Preferably, the authentication message further comprises time of generation of the authentication message, and the authentication server further comprises:
a real-time clock for generating real time,
and the authentication unit further comprises:
a comparison unit for comparing the time in the authentication message with the current real time generated by the real-time clock,
wherein if the time difference is greater than a predetermined threshold, the authentication fails, or
if the time difference is not greater than the predetermined threshold, the authentication succeeds.

Preferably, the authentication message further comprises time of generation of the authentication message, and the authentication server further comprises:
a memory for storing the authentication message in the authentication request received each time, and the authentication unit further comprises:
   a comparison unit for comparing the authentication message/messages received previously and stored in the memory with the authentication message in the authentication request currently received,
   wherein if at least one of the authentication message/messages previously received is identical to the authentication message currently received, the authentication fails, or
   if none of the authentication message/messages previously received is identical to the authentication message currently received, the authentication succeeds.

Preferably, the authentication message further comprises time of generation of the authentication message, and the authentication server further comprises:
a real-time clock for generating real time, and
a memory for storing the authentication message in the authentication request received each time, and the authentication unit further comprises:
   a comparison unit for comparing the time in the authentication message currently received with the current real time generated by the real-time clock,
   wherein if the time difference is greater than a predetermined threshold, the authentication fails, or
   if the time difference is not greater than the predetermined threshold, the comparison unit is further used to compare the authentication message/messages received previously and stored in the memory with the authentication message in the authentication request currently received,
   wherein if at least one of the authentication message/messages previously received is identical to the authentication message currently received, the authentication fails, or
   if none of the authentication message/messages previously received is identical to the authentication message currently received, the authentication succeeds.

Preferably, an authentication message stored in the memory is deleted from the memory when the time comprised by the authentication message is earlier than the current real time generated by the real-time clock by more than the predetermined threshold.

Preferably, the authentication message further comprises a rolling code, the authentication server further comprises:
a rolling code generator for generating a rolling code/codes,
and the authentication unit further comprises:
a comparison unit for comparing the rolling code in the authentication message with the corresponding rolling code/codes generated by the rolling code generator,
wherein if the rolling code in the authentication message is not equal to any of the corresponding rolling code/codes generated by the rolling code generator, the authentication fails, or
if the rolling code in the authentication message is equal to at least one of the corresponding rolling code/codes generated by the rolling code generator, the authentication succeeds.

Preferably, the authentication message further comprises a user identifier, which is for identifying a user whose identity is to be authenticated, and user identity information in order to authenticate a user's identity according to the user identity information, and the authentication server further comprises:
a memory for pre-storing a user identifier/identifiers and the corresponding user identity information,
and the authentication unit further comprises:
a search unit for searching the memory for the corresponding user identity information based on the user identifier in the authentication message, and
a comparison unit for comparing the user identity information so retrieved with the user identity information in the authentication message,
wherein if at least one piece of user identity information so retrieved is identical to the user identity information in the authentication message, the authentication succeeds, or otherwise, the authentication fails.

Preferably, if the authentication succeeds, the authentication unit is further used to pay a specific amount from a specific user payment account to a specific operator account.

Preferably, the authentication message currently received further comprises user identity information wherein the user identity information comprises the user payment account identifier that is used to identify the specific user payment account.

Preferably, the memory is further used to pre-store the user payment account identifier that is used to identify the specific user payment account.

Preferably, the authentication server further comprises:
a memory for pre-storing the user payment account identifier that is used to identify the specific user payment account.

Preferably, the authentication message currently received further comprises a user identifier, which is for identifying the user whose identity is to be authenticated, and the memory is further used to pre-store user identifier/identifiers and the corresponding user payment account identifier/identifiers, and the authentication unit further comprises:
a search unit for searching the memory for the corresponding user payment account identifier that is used to identify the specific user payment account, based on the user identifier in the authentication message currently received.

Preferably, the authentication message currently received further comprises a user identifier, which is for identifying the user whose identity is to be authenticated, and the memory is further used to pre-store a user identifier/identifiers and the corresponding user payment account identifier/identifiers, and the search unit is further used to search the memory for the corresponding user payment account identifier that is used to identify the specific user payment account, based on the user identifier in the authentication message currently received.

Preferably, the authentication message currently received further comprises a user identifier, which is for identifying the user whose identity is to be authenticated, and the authentication server further comprises:
a memory for pre-storing a user identifier/identifiers and the corresponding user payment account identifier/identifiers, and
the authentication unit further comprises:
a search unit for searching the memory for the corresponding user payment account identifier that is used to identify the specific user payment account, based on the user identifier in the authentication message currently received.

Preferably, the authentication message or authentication request currently received further comprises the operator account identifier for identifying the specific operator account.

Preferably, the memory is further used to pre-store the operator account identifier that is used to identify the specific operator account.

Preferably, the authentication server further comprises:
a memory for pre-storing the operator account identifier that is used to identify the specific operator account.

Preferably, the authentication message or authentication request currently received further comprises an operator identifier, and the memory is further used to pre-store an operator identifier/identifiers and the corresponding operator account identifier/identifiers,
and the authentication unit further comprises:
a search unit for searching the memory for the corresponding operator account identifier that is used to identify the specific operator account, based on the operator identifier in the authentication message or authentication request currently received.

Preferably, the authentication message or authentication request currently received further comprises an operator identifier, and the memory is further used to pre-store an operator identifier/identifiers and the corresponding operator account identifier/identifiers, and the search unit is further used to search the memory for the corresponding operator account identifier that is used to identify the specific operator account, based on the operator identifier in the authentication message or authentication request currently received.

Preferably, the authentication message or authentication request currently received further comprises an operator identifier, and the authentication server further comprises:
a memory for pre-storing an operator identifier/identifiers and the corresponding operator account identifier/identifiers,
and the authentication unit further comprises:
a search unit for searching the memory for the corresponding operator account identifier that is used to identify the specific operator account, based on the operator identifier in the authentication message or authentication request currently received.

Preferably, the authentication message or authentication request currently received further comprises an amount wherein the amount in the authentication message or authentication request currently received is the specific amount.

Preferably, the memory is further used to pre-store an amount, and the amount stored in the memory is the specific amount.

Preferably, the authentication server further comprises:
a memory for pre-storing an amount, and the amount stored in the memory is the specific amount.

Preferably, the authentication message currently received further comprises a user identifier, which is for identifying the user whose identity is to be authenticated, and the memory is further used to pre-store a user identifier/identifiers and the corresponding amount/amounts, and the authentication unit further comprises:
a search unit for searching the memory for the corresponding amount based on the user identifier in the authentication message currently received, and the amount so retrieved is the specific amount.

Preferably, the authentication message currently received further comprises a user identifier, which is for identifying the user whose identity is to be authenticated, and the memory is further used to pre-store a user identifier/identifiers and the corresponding amount/amounts, and the search unit is further used to search the memory for the corresponding amount, based on the user identifier in the authentication message currently received, and the amount so retrieved is the specific amount.

Preferably, the authentication message currently received further comprises a user identifier, which is for identifying the user whose identity is to be authenticated, and the authentication server further comprises:
a memory for pre-storing a user identifier/identifiers and the corresponding amount/amounts,
and the authentication unit further comprises:
a search unit for searching the memory for the corresponding amount based on the user identifier in the authentication message currently received, and the amount so retrieved is the specific amount.

Preferably, the authentication message further comprises user identity information, and the user identity information comprises a ticket identifier, which is for identifying at least one ticket to be exercised by a user.

According to another aspect of the present invention, an authentication front-end computer system is provided. The authentication front-end computer system comprises:
an authentication request generator for generating an authentication request/requests comprising an authentication message/messages,
a transmitter for transmitting the authentication request/requests to a specific authentication server, and
a receiver for receiving an authentication instruction/instructions comprising the authentication message/messages from a user terminal.

Preferably, the receiver is further used to receive an authentication result/results from the authentication server.

Preferably, the authentication front-end computer system further comprises:
a memory for storing an authentication server's identifier, an operator account identifier or an operator identifier, and/or an amount.

Preferably, the authentication request generator further incorporates the operator account identifier or operator identifier stored in the memory and/or the amount stored in the memory into the authentication request, wherein the operator account identifier is for identifying an operator account of the operator to receive user payment, and the operator identifier is for identifying the operator to receive user payment.

Preferably, the authentication server's identifier stored in the memory is for identifying the specific authentication server.

Preferably, the receiver further comprises:
a reader for reading the authentication instruction/instructions comprising the authentication message/messages, wherein the authentication instruction/instructions is/are displayed on the user terminal in a textual and/or machine-readable format/formats.

Preferably, the authentication front-end computer system further comprises:
a user interface wherein the user inputs an authentication instruction/instructions comprising an authentication message/messages into the authentication front-end computer system through the user interface, and wherein the authentication instruction/instructions is/are displayed on a user terminal in a textual format/formats.

Preferably, the receiver further comprises:
a non-contact communication receiver for receiving the authentication instruction/instructions comprising the authentication message/messages from the user terminal through non-contact communication.

Preferably, the authentication instruction further comprises the identifier of the authentication server for authenticating user identity wherein the identifier is for identifying the specific authentication server.

Preferably, the transmitter further transmits to the user terminal the authentication result/results received by the receiver from the authentication server.

According to another aspect of the present invention, a system for authenticating user identity is provided. The system comprises: the user terminal, the authentication server, and the authentication front-end computer system as described herein.
"Predetermined threshold" and "predetermined interval" used herein may refer to two arbitrary periods of time as preset in the presently claimed system/method by the user.

### BENEFICIAL EFFECTS OF THE INVENTION

Compared to the existing technologies, the technical solutions provided in the embodiments of the present invention have the following beneficial effects. In the first implementation scheme of the present invention, a user terminal generates an authentication instruction comprising an authentication message and transmits the authentication instruction to an authentication front-end computer system. The authentication front-end computer system transmits an authentication request comprising the authentication message to a specific authentication server. In the second implementation scheme of the present invention, a user terminal generates an authentication request comprising an authentication message and transmits the authentication request to a specific authentication server. In each of the two said implementation schemes, the authentication server subsequently authenticates a user identity according to the authentication message, and preferably, transmits an authentication result to the authentication front-end computer system so that an operator utilizing the authentication front-end computer system and/or authentication server can authenticate the user identity, guaranteeing the operational security of the operator.

The present invention can be implemented totally through computer software, so it can be implemented in a variety of common mobile terminals and/or computers. As such, the present invention does not need specialized hardware infrastructure to accomplish user identity authentication by online operators and physical operators. Thus, the present invention does not need specialized hardware infrastructure to accomplish a variety of payment operations, including payment to online operators and physical operators. By the same token, the present invention does not need specialized hardware infrastructure to accomplish a variety of ticketing operations. All a user or an operator needs is to register with an authentication server and conduct simple software installation and/or configuration. The operator may also need to install some general-purpose hardware and/or apparatus (for example, receivers, etc.) but there is no need to purchase and/or install specialized hardware and/or apparatus. Thus, the installation and/or configuration is simple and low-cost. In addition, the above registration with the authentication server and software installation and/or configuration are not confined to particular geographic regions. Operators can authenticate the identity of users from different regions, realizing globalization.

Moreover, authentication is accomplished through a user terminal, so a user is not required to carry multiple physical cards and physical tickets, which not only is more convenient but also avoids forgery, loss, and unauthorized use. Better still, mobile phones, personal digital assistants (PDAs), tablet computers, or mobile digital devices can act as the user terminals of the present invention, leading to high mobility and portability. This adds an advantage to the present invention in that its implementation lends itself more to being widely used than the existing technologies.

In the operation of the present invention, if a user terminal needs to use an encryption key for encryption or use a private key for generation of a digital signature, the encryption key (or its part[s]) or the private key (or its part[s]) can be inputted as a password into the user terminal by a user. Thus, the password is neither required to be inputted into any other computers, communication equipment and/or webpages nor transmitted, thereby effectively reducing the risk of password being stolen and improving information security.

In one of the implementations of the present invention, the data transmitted can be text instead of images, videos, webpages, etc. Therefore, the volume of data transmission is small, consuming minimal network resources and attaining a low transmission cost and a high transmission speed. This results in rapid authentication of user identity, payment operation, and ticketing operation.

The operation of the present invention is completely free from human verification, so it has a high speed and a low cost and avoids human errors and frauds. It is also paperless and/or plastic-free and thus environment-friendly.

User identity authentication, payment operation, and ticketing operation based on the present invention can be recorded in an authentication server and an authentication front-end computer system for any future use as and when necessary. Applications of these records include but not limited to taxation, transactional disputes, and the accounting of the turnover of an operator and/or its departments and/or its partners. Paper receipts and records can be completely replaced.

### BRIEF DESCRIPTION OF THE DRAWINGS

These and other aspects of the present invention will become clearer from the embodiments illustrated by drawings. Also, the various embodiments of the present invention are herein detailed with reference to the drawings. The drawings include:
Figure 1 is a block diagram illustrating a system used for authenticating user identity according to one embodiment of the present invention.
Figure 2 is a block diagram illustrating a user terminal according to one embodiment of the present invention.
Figure 3 is a block diagram illustrating an authentication front-end computer system according to one embodiment of the present invention.
Figure 4 is a block diagram illustrating an authentication server according to one embodiment of the present invention.
Figure 5 is a flow chart illustrating a method used for authenticating user identity according to one embodiment of the present invention.
Figure 6 is a flow chart illustrating a method used for authenticating user identity according to the second embodiment of the present invention.
Figure 7 is a flow chart illustrating a method used for authenticating user identity according to the third embodiment of the present invention.
Figure 8 is a flow chart illustrating a method used for authenticating user identity according to the fourth embodiment of the present invention.

The present invention is further described with reference to the drawings in conjunction with the embodiments in the following section.

### DETAILED DESCRIPTION OF THE INVENTION

The various embodiments of the present invention are described in detail with reference to the drawings as follows.

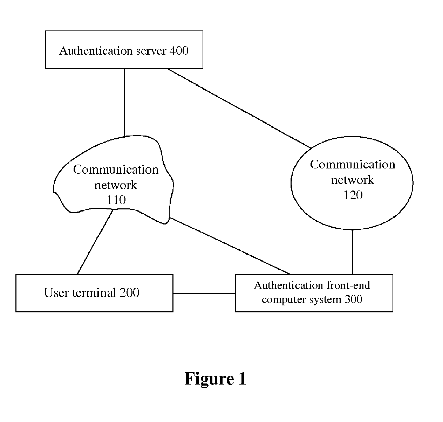

Figure 1 shows a block diagram illustrating a system used for authenticating user identity according to one embodiment of the present invention. As shown in the figure, an authentication system according to one embodiment of the present invention comprises an optional communication network 110, a communication network 120, a user terminal 200, an authentication front-end computer system 300, and an authentication server 400. The communication network 110 can be a wireless communication network, a wired communication network, or a combination of both. It can also be a local area network (LAN), a metropolitan area network (MAN), a wide area network (WAN), or a combination of two or even all three of them. The communication network 120 can be a wireless communication network, a wired communication network, or a combination of both. It can also be a LAN, a MAN, a WAN, or a combination of two or even all three of them. It can also be the bus network inside a computer system. Preferably, the communication network 110 and communication network 120 can be the same communication network. Alternatively, the communication network 110 and communication network 120 are two independent communication networks. The user terminal 200 can be a mobile phone, a PDA, a tablet computer (e.g., an iPad), or a mobile digital device such as an iPod. Preferably, the authentication front-end computer system 300 and the authentication server 400 can be combined into one computer system. In that case, the communication network 120 is the bus network inside the single computer system. Alternatively, the authentication front-end computer system 300 and the authentication server 400 are two independent computer systems. In that case, the communication network 120 can be a wireless communication network, a wired communication network, or a combination of both. It can also be a LAN, a MAN, a WAN, or a combination of two or even all three of them.

According to one embodiment of the present invention, when an operator (e.g., a merchant) needs to authenticate a user identity, the user terminal 200 transmits an authentication instruction comprising an authentication message to the authentication front-end computer system 300. After receiving the authentication instruction, the authentication front-end computer system 300 generates an authentication request comprising the authentication message according to the authentication message and transmits the authentication request to a specific authentication server 400 through the communication network 120. After receiving the authentication request, the specific authentication server 400 authenticates the user identity according to the authentication message. Preferably, an identifier of the specific authentication server 400 has been pre-stored in the authentication front-end computer system 300 as the identifier of the default authentication server 400. Alternatively, the authentication instruction comprises an identifier specifying the specific authentication server 400. Finally, preferably, the authentication server 400 transmits an authentication result to the authentication front-end computer system 300 through the communication network 120. Preferably, the authentication result comprises the success of the authentication or the failure of the authentication.

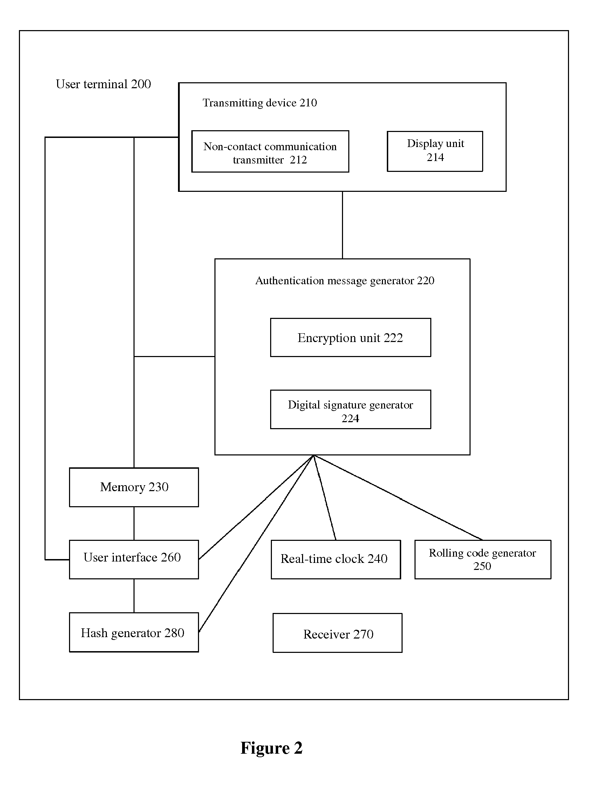

The specific, structural block diagrams of the embodiments of the user terminal 200, authentication front-end computer system 300, and authentication server 400 are respectively illustrated in Figure 2, Figure 3, and Figure 4.

Figure 2 is a block diagram illustrating a user terminal 200 according to one embodiment of the present invention. As shown in Figure 2, the user terminal 200 comprises: a transmitting device 210, which is used to transmit authentication instruction(s) comprising authentication message(s) to an authentication front-end computer system(s) 300 or used to transmit authentication request(s) comprising authentication message(s) to an authentication server(s) 400, an authentication message generator 220, which is used to generate the authentication message(s), an optional memory 230, which is used to store user identifier(s) and/or store the user identity information and/or store the identifier(s) of authentication server(s) 400 and/or store an encryption key(s) or its part(s), and/or store a private key(s) or its part(s) and/or store user payment account identifier(s) and/or store ticket identifier(s) and/or store other information required by the operation of the user terminal 200, an optional real-time clock 240, which is used to generate real time, which the authentication message(s) may comprise, an optional rolling code generator 250, which is used to generate rolling code(s), which the authentication message(s) may comprise where rolling codes are also called hopping codes, and preferably, the rolling code(s) can be KeeLoq code(s), HITAG code(s), or AVR411 code(s), an optional user interface 260, through which a user(s) input information into the user terminal 200, and an optional receiver 270, which is used to receive authentication result(s) from the authentication server(s) 400 directly or through the authentication front-end computer system(s) 300 as an intermediate node(s). The real-time clock 240 and the rolling code generator 250 can substitute for each other or can coexist. The optional hash generator 280 is used to generate hash(es) for the information inputted by the user(s) through the user interface 260.

Preferably, the transmitting device 210 comprises a display unit 214, which is used to display the authentication instruction(s) comprising the authentication message(s) in a textual and/or machine-readable format, which is to be read by the reader(s) 314 in the authentication front-end computer system(s) 300. Alternatively, the transmitting device 210 comprises a non-contact communication transmitter 212, which is used to transmit the authentication instruction(s) comprising the authentication message(s) to the authentication front-end computer system 300 through non-contact communication. Preferably, the machine-readable format can be one- or two-dimensional barcode(s).

Preferably, the authentication message generator 220 incorporates into the authentication message(s) a user identifier(s), which is used to identify the user(s) whose identity(ies) is to be authenticated. Preferably, the authentication message generator 220 incorporates into the authentication message(s) user identity information in order to enable authentication of user identity according to the user identity information or in order to incorporate into the user identity information a user payment account identifier or a ticket identifier. The user payment account identifier is used to identify a user payment account used by a user to pay whereas the ticket identifier is used to identify at least one ticket to be exercised by a user.

Preferably, the authentication message generator 220 comprises an encryption unit 222, which is used to encrypt the whole or part of the authentication message(s) to be transmitted based on an encryption key(s). Examples of partial encryption include: if the authentication message to be transmitted comprises a user identifier, only the part(s) of the authentication message other than the user identifier is encrypted. Alternatively, the authentication message generator 220 comprises a digital signature generator 224, which is used to generate a digital signature(s) based on a private key(s). The authentication message(s) to be transmitted comprises the digital signature(s). The digital signature(s) is used to verify the data integrity of the part(s) of the authentication message(s) to be transmitted other than the digital signature(s) or the part(s) of the authentication message(s) to be transmitted other than the digital signature(s) and user identifier(s), if any.

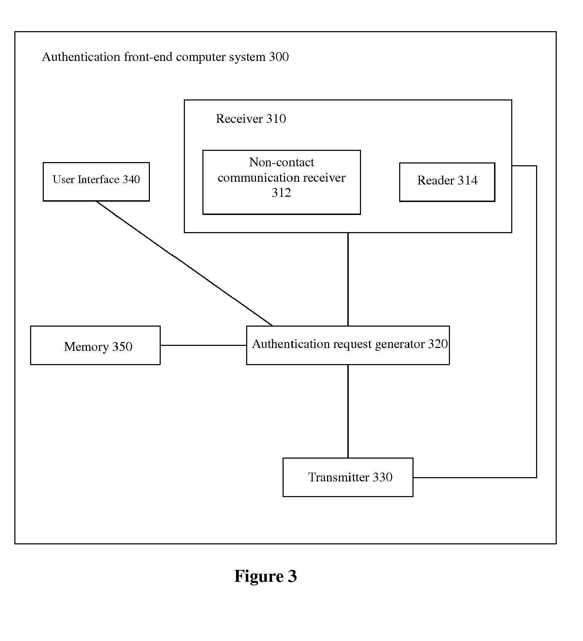

Figure 3 is a block diagram illustrating an authentication front-end computer system 300 according to one embodiment of the present invention. As shown in Figure 3, the authentication front-end computer system 300 comprises: an authentication request generator 320, which is used to generate authentication request(s) comprising authentication message(s), a transmitter 330, which is used to transmit the authentication request(s) to a specific authentication server(s) 400 through the communication network 120, a receiver 310, which is used to receive authentication instruction(s) comprising the authentication message(s) from the user terminal(s) 200, an optional user interface 340, through which authentication instruction(s) comprising the authentication message(s) and displayed in a textual format on the user terminal(s) 200 is inputted by the user(s) into the authentication front-end computer system 300, an optional memory 350, which is used to store the identifier(s) of the authentication server(s) 400, and/or store an operator account identifier(s) or an operator identifier(s), and/or store an amount(s). Preferably, the identifier(s) of the authentication server(s) 400 stored in the memory 350 is used to identify the specific authentication server(s) 400. Preferably, if the authentication message does not comprise the operator account identifier or the operator identifier, the authentication request generator 320 incorporates into the authentication request the operator account identifier or operator identifier stored in the memory 350. Preferably, if the authentication message does not comprise the amount, the authentication request generator 320 incorporates into the authentication request the amount stored in the memory 350. Preferably, the receiver 310 also receives authentication result(s) from the authentication server(s) 400. Preferably, the transmitter 330 transmits the authentication result(s) to the user terminal 200 through the communication network 110 where the authentication result(s) is received by the receiver 310 from the authentication server(s) 400.

Preferably, the receiver 310 further comprises a reader 314, which is used to read authentication instruction(s) comprising the authentication message(s) and displayed in a textual and/or machine-readable format on the user terminal(s) 200. Alternatively, the receiver 310 further comprises a non-contact communication receiver 312, which is used to receive authentication instruction(s) comprising the authentication message(s) from the user terminal(s) 200 through non-contact communication. Preferably, the machine-readable format includes one- or two- dimensional barcodes.

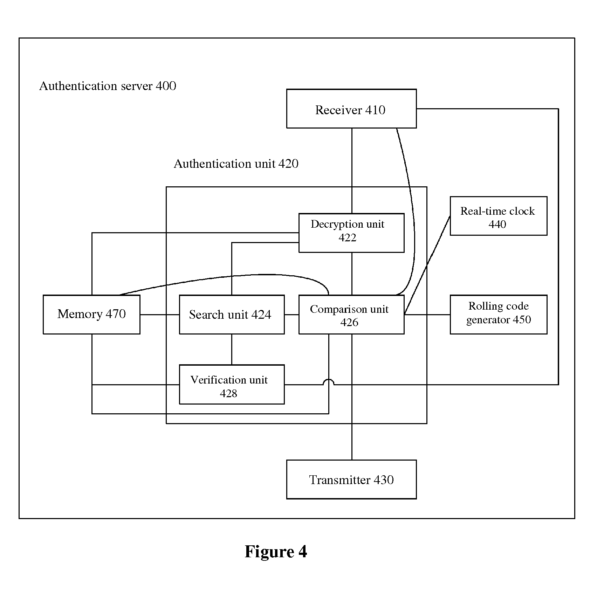

Figure 4 is a block diagram illustrating an authentication server 400 according to one embodiment of the present invention. As shown in Figure 4, the authentication server 400 comprises: a receiver 410, which is used to receive authentication request(s) comprising the authentication message(s) from the authentication front-end computer system(s) 300 or the user terminal(s) 200, an authentication unit 420, which is used to authenticate user identity according to the authentication message(s), an optional transmitter 430, which is used to transmit authentication result(s) from the authentication unit 420 to the authentication front-end computer system(s) 300 through the communication network 120, an optional real-time clock 440, which is used to generate real time, an optional rolling code generator 450, which is used to generate rolling code(s). The real-time clock 440 and rolling code generator 450 can substitute each other or coexist. The real-time clock 440 should approximately synchronize with the real-time clock(s) 240 in the user terminal(s) 200. The rolling code generator 450 should approximately synchronize with the rolling code generator(s) 250 in the user terminal(s) 200. Preferably, the transmitter 430 also transmits the authentication result(s) to the user terminal(s) 200 through the communication network 110.

The embodiment can be implemented in different modes as described below.
Mode 1: The authentication message does not comprise any user identifier, and the authentication message is encrypted. In mode 1, the authentication server 400 further comprises a memory 470, which is used to pre-store a decryption key for decrypting the encrypted authentication message. The authentication unit 420 comprises a decryption unit 422, which is used to decrypt the encrypted authentication message(s) currently received based on the decryption key stored in the memory 470.
Mode 2: The authentication message comprises a user identifier, and the part(s) of the authentication message other than the user identifier is encrypted. In mode 2, the authentication server 400 further comprises a memory 470, which is used to pre-store user identifier(s) and the corresponding decryption key(s) for decrypting the encrypted part(s) of the authentication message(s). The authentication unit 420 comprises a decryption unit 422 and a search unit 424. Based on the user identifier in the authentication message currently received, the search unit 424 searches the memory 470 for the decryption key for decryption. The decryption unit 422 uses the decryption key so retrieved to decrypt the encrypted part(s) of the authentication message currently received.
Mode 3: The authentication message does not comprise any user identifier, but comprises a digital signature. In mode 3, the authentication server 400 further comprises a memory 470, which is used to pre-store a public key for verifying the data integrity of the part(s) of the authentication message currently received other than the digital signature. The authentication unit 420 comprises a verification unit 428, which is used to verify the data integrity of the part(s) of the authentication message currently received other than the digital signature based on the public key stored in the memory 470 and the digital signature. If it is verified that the data integrity is not maintained, the authentication fails. Otherwise, if it is verified that the data integrity is maintained, the authentication continues through conducting such other authentication step(s) as the time verification step and/or the duplication verification step and/or the rolling code verification step described below.
Mode 4: The authentication message comprises a user identifier and a digital signature. In mode 4, the authentication server 400 further comprises a memory 470, which pre-stores user identifier(s) and the corresponding public key(s) for verifying the data integrity of the part(s) of the authentication message currently received other than the digital signature or the part(s) of the authentication message currently received other than the digital signature and the user identifier. The authentication unit 420 comprises a verification unit 428 and a search unit 424. Based on the user identifier currently received, the search unit 424 searches the memory 470 for the public key for verification. Based on the public key so retrieved and the digital signature, the verification unit 428 verifies the data integrity of the part(s) of the authentication message currently received other than the digital signature or the part(s) of the authentication message currently received other than the digital signature and the user identifier. If it is verified that the data integrity is not maintained, the authentication fails. Otherwise, if it is verified that the data integrity is maintained, the authentication continues through conducting such other authentication step(s) as the time verification step and/or the duplication verification step and/or the rolling code verification step described below.
Mode 5: The authentication message comprises a rolling code. In mode 5, the authentication unit 420 comprises a comparison unit 426, which is used to compare the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds.
Mode 6: The authentication message comprises a user identifier and user identity information. In mode 6, the authentication server 400 further comprises a memory 470, which is used to pre-store user identifier(s) and the corresponding user identity information. The authentication unit 420 comprises a search unit 424 and a comparison unit 426. The search unit 424 is used to search the memory 470 for the corresponding user identity information based on the user identifier in the authentication message currently received. The comparison unit 426 is used to compare the user identity information so retrieved with the user identity information in the authentication message currently received. If the user identity information compared shows difference, the authentication fails. If the user identity information compared shows no difference, the authentication succeeds.

Mode 1, mode 2, mode 3, mode 4, mode 5, or mode 6 above can be combined with various other additional features. Preferably, mode 1, mode 2, mode 3, or mode 4 can be combined with the following additional features: Each authentication message comprises the time of the authentication message' generation. In that case, any one of the three time comparison procedures can be adopted.

Time comparison procedure 1: According to time comparison procedure 1, the authentication unit 420 of the authentication server 400 further comprises a comparison unit 426, which is used to compare the time in the authentication message currently received with the current real time generated by the real-time clock 440. If the difference between the times compared is greater than a predetermined threshold, the authentication fails. Otherwise, if the difference between the times compared is not greater than the predetermined threshold, the authentication succeeds.

Time comparison procedure 2: According to time comparison procedure 2, the memory 470 of the authentication server 400 further stores the authentication message in the authentication request received each time. The authentication unit 420 further comprises a comparison unit 426, which is used to compare the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the authentication succeeds.

Time comparison procedure 3: According to time comparison procedure 3, the memory 470 in the authentication server 400 further stores the authentication message in the authentication request received each time. The authentication unit 420 further comprises a comparison unit 426, which is used to compare the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 is further used to compare the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the authentication succeeds. The time comparison procedure 1 above is the present invention's time verification step. The time comparison procedure 2 above is the present invention's duplication verification step. The time comparison procedure 3 above is a combination of the present invention's time verification step and the present invention's duplication verification step.

Alternatively, mode 1, mode 2, mode 3, or mode 4 is combined with the following additional features: the authentication message comprises a rolling code. In that case, the authentication unit 420 further comprises a comparison unit 426, which is used to compare the rolling code in the authentication message currently received with the corresponding rolling code generated by the rolling code generator 450. If the rolling code in the authentication message currently received is not equal to any of corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds. The comparison of rolling codes above is the present invention's rolling code verification step.

Alternatively, mode 1, mode 2, mode 3, or mode 4 is combined with the following additional features: the authentication message comprises both the time of the authentication message's generation and a rolling code. In that case, any one of the following three time comparison procedures can be adopted.

Time comparison procedure 1: According to time comparison procedure 1, the authentication unit 420 of the authentication server 400 further comprises the comparison unit 426, which is used to compare the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 is further used to compare the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds.

Time comparison procedure 2: According to time comparison procedure 2, the memory 470 in the authentication server 400 further stores the authentication message in the authentication request received each time. The authentication unit 420 further comprises a comparison unit 426, which is used to compare the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the comparison unit 426 is further used to compare the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds.

Time comparison procedure 3: According to time comparison procedure 3, the memory 470 in the authentication server 400 further stores the authentication message in the authentication request received each time. The authentication unit 420 further comprises a comparison unit 426, which is used to compare the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 is further used to compare the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the comparison unit 426 is further used to compare the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds.

In any of the modes above, preferably, the authentication server 400 further comprises a memory 470 (if the authentication server 400 does not originally comprise a memory 470), which is used to pre-store a user payment account identifier, or a ticket identifier or the memory 470 of the authentication server 400 is further used to pre-store a user payment account identifier or a ticket identifier (if the authentication server 400 originally comprises a memory 470).

In some of the modes above (e.g., in mode 2, mode 4 or mode 6, or in mode 5 combined with the following additional feature: the authentication message comprises a user identifier), the authentication message comprises a user identifier. Preferably, the authentication server 400 further comprises a memory 470 (if the authentication server 400 does not originally comprise a memory 470), which is used to pre-store user identifier(s) and the corresponding user payment account identifier(s) or the corresponding ticket identifier(s), or the memory 470 of the authentication server 400 is further used to pre-store user identifier(s) and the corresponding user payment account identifier(s) or the corresponding ticket identifier(s) (if the authentication server 400 originally comprises a memory 470). The authentication unit 420 further comprises a search unit 424 (if the authentication unit 420 does not originally comprise a search unit 424), which is used to search the memory 470 for the corresponding user payment account identifier or the corresponding ticket identifier based on the user identifier in the authentication message currently received, or the search unit 424 of the authentication unit 420 is further used to search the memory 470 for the corresponding user payment account identifier or the corresponding ticket identifier based on the user identifier in the authentication message currently received (if the authentication unit 420 originally comprises a search unit 424).

In any of the modes above, preferably, the authentication server 400 further comprises a memory 470 (if the authentication server 400 does not originally comprise a memory 470), which is used to pre-store an operator account identifier, or the memory 470 of the authentication server 400 is further used to pre-store an operator account identifier (if the authentication server 400 originally comprises a memory 470). If any of the modes above is combined with the following additional features: the authentication message or the authentication request comprises an operator identifier, the authentication server 400 further comprises a memory 470 (if the authentication server 400 does not originally comprise a memory 470), which is used to pre-store operator identifier(s) and the corresponding operator account identifier(s), or the memory 470 of the authentication server 400 is further used to pre-store operator identifier(s) and the corresponding operator account identifier(s) (if the authentication server 400 originally comprises a memory 470). The authentication unit 420 further comprises a search unit 424 (if the authentication unit 420 does not originally comprise a search unit 424), which is used to search the memory 470 for the corresponding operator account identifier based on the operator identifier currently received, or the search unit 424 of the authentication unit 420 is further used to search the memory 470 for the corresponding operator account identifier based on the operator identifier currently received (if the authentication unit 420 originally comprises a search unit 424).

In any of the modes above, preferably, the authentication server 400 further comprises a memory 470 (if the authentication server 400 does not originally comprise a memory 470), which is used to pre-store an amount, or the memory 470 of the authentication server 400 is further used to pre-store the amount (if the authentication server 400 originally comprises a memory 470). In some of the modes above (e.g., in mode 2, mode 4, or mode 6, or in mode 5 combined with the following additional feature: the authentication message comprises a user identifier), the authentication message comprises a user identifier. Preferably, the authentication server 400 further comprises a memory 470 (if the authentication server 400 does not originally comprise a memory 470), which is used to pre-store user identifier(s) and the corresponding amount(s), or a memory 470 of the authentication server 400 is further used to pre-store user identifier(s) and the corresponding amount(s) (if the authentication server 400 originally comprises a memory 470). The authentication unit 420 further comprises a search unit 424 (if the authentication unit 420 does not originally comprise a search unit 424), which is used to search the memory 470 for the corresponding amount based on the user identifier in the authentication message currently received, or the search unit 424 of the authentication unit 420 is further used to search the memory 470 for the corresponding amount based on the user identifier in the authentication message currently received (if the authentication unit 420 originally comprises a search unit 424).

The specific operation of the embodiments of the present invention is illustrated below with reference to the structural block diagrams of the user terminal 200, authentication front-end computer system 300, and authentication server 400.

When a user is to pay an amount to an operator through his or her user payment account, the authentication message generator 220 generates an authentication message. Corresponding to some modes of the authentication server 400 (e.g., mode 2, mode 4, or mode 6, or mode 5 combined with the following additional feature: the authentication message comprises a user identifier), the authentication message comprises a user identifier. Preferably, the memory 230 in the user terminal 200 pre-stores the user identifier of the user. The authentication message generator 220 further incorporates into the generated authentication message the stored user identifier. Alternatively, the memory 230 in the user terminal 200 pre-stores at least one user identifier. Through the user interface 260, the user chooses his/her user identifier from the stored user identifier(s). The authentication message generator 220 further incorporates into the generated authentication message the chosen user identifier. Alternatively, the user inputs his/her user identifier through the user interface 260. The authentication message generator 220 further incorporates into the generated authentication message the inputted user identifier.

Any mode of the authentication server 400 can be combined with the following additional feature: the authentication message comprises user identity information wherein the user identity information comprises the user payment account identifier of the user payment account. In that case, preferably, the memory 230 in the user terminal 200 pre-stores the user identity information. The authentication message generator 220 further incorporates into the generated authentication message the stored user identity information. Alternatively, the memory 230 in the user terminal 200 pre-stores at least one user payment account identifier. Through the user interface 260, the user chooses the user payment account identifier of the user payment account from the stored user payment account identifier. The authentication message generator 220 further incorporates into the generated authentication message user identity information wherein the user identity information comprises the chosen user payment account identifier. Alternatively, through the user interface 260, the user inputs the user payment account identifier of the user payment account. The authentication message generator 220 further incorporates into the generated authentication message user identity information wherein the user identity information comprises the inputted user payment account identifier. Any modes of the authentication server 400 can be combined with the following additional feature: the authentication message comprises user identity information that does not comprise any user payment account identifier. In that case, the authentication message generator 220 incorporates into the generated authentication message user identity information that does not comprise any user payment account identifier.

Any mode of the authentication server 400 can be combined with the following additional feature: the authentication message comprises an operator account identifier or an operator identifier. In that case, through non-contact communication or contact communication, the authentication front-end computer system 300 transmits the operator account identifier of the operator or the operator identifier of the operator to the user terminal 200. Alternatively, the authentication front-end computer system 300 displays the operator account identifier of the operator or the operator identifier of the operator in a textual and/or machine-readable format, which is to be read by the user terminal 200 or to be read and inputted through the user interface 260 into the user terminal 200 by the user. The authentication message generator 220 further incorporates into the generated authentication message the operator account identifier of the operator or the operator identifier of the operator.

Any mode of the authentication server 400 can be combined with the following additional feature: the authentication message comprises an amount. In that case, the authentication front-end computer system 300 transmits the amount payable to the user terminal 200 through non-contact communication or contact communication. Alternatively, the authentication front-end computer system 300 displays the amount payable in a textual and/or machine-readable format, which is to be read by the user terminal 200, or to be read and inputted through the user interface 260 into the user terminal 200 by the user. The authentication message generator 220 further incorporates the generated authentication message the amount payable.

Any mode of the authentication server 400 can be combined with the following additional feature: the authentication instruction, if any, comprises the identifier of an authentication server 400. In that case, preferably, the memory 230 in the user terminal 200 pre-stores the identifier of an authentication server 400. The authentication instruction transmitted by the transmitting device 210 further comprises the stored identifier of an authentication server 400. Alternatively, the memory 230 in the user terminal 200 pre-stores at least one identifier of an authentication server 400. Through the user interface 260, the user chooses from the stored identifier(s) of authentication server(s) 400. The authentication instruction transmitted by the transmitting device 210 further comprises the chosen identifier of an authentication server 400. The user chooses the identifier of the corresponding authentication server 400 according to the user payment account. Alternatively, the user, according to the type of the user payment account (e.g., a type includes all the user payment accounts with a bank), chooses the identifier of the corresponding authentication server 400 (e.g., the identifier of the authentication server 400 of this bank). Alternatively, the user inputs the identifier of an authentication server 400 through the user interface 260. The authentication instruction transmitted by the transmitting device 210 further comprises the inputted identifier of an authentication server 400. The user inputs the identifier of the corresponding authentication server 400 according to the user payment account. Alternatively, the user inputs the identifier of the corresponding authentication server 400 according to the type of the user payment account.

Mode 1, mode 2, mode 3, or mode 4 of the authentication server 400 can be combined with the following additional feature: the authentication message comprises the time of the authentication message's generation. In that case, the authentication message generator 220 of the user terminal 200 incorporates into the generated authentication message(s) the current real time(s) generated by the real-time clock 240. The time may but may not necessarily comprise a date and a time of the day. Mode 1, mode 2, mode 3, or mode 4 of the authentication server 400 can be combined with the following additional feature: the authentication message comprises a rolling code. In that case, the authentication message generator 220 of the user terminal 200 incorporates into the generated authentication message(s) the rolling code(s) generated by the rolling code generator 250. The rolling code(s) can be Keeloq code(s), HITAG code(s), or AVR411 code(s), etc. The rolling code may but may not necessarily be associated with the user identifier, if any, in the generated authentication message. In mode 1, mode 2, mode 3, or mode 4 of the authentication server 400, the two additional features above can substitute each other or coexist. In other words, the authentication message can comprise the time of the authentication message's generation or a rolling code, or simultaneously comprise the time of the authentication message's generation and a rolling code. In mode 5 of the authentication server 400, as the generated authentication message comprises a rolling code, the authentication message generator 220 of the user terminal 200 incorporates into the generated authentication message the rolling code generated by the rolling code generator 250. The rolling code can be a Keeloq code, a HITAG code, or an AVR411 code, etc. The rolling code may but may not necessarily be associated with the user identifier, if any, in the generated authentication message. The current real time and/or rolling code in the generated authentication message makes the authentication message generated each time distinct, giving rise to dynamic authentication message(s) as opposed to static authentication message(s) being generated and thus preventing anybody other than the user from impersonating the user through reusing previously generated authentication message(s) for the re-authentication of the user's identity. This enhances information security.

Subsequently, in mode 1 of the authentication server 400, as the authentication message does not comprise a user identifier and the authentication message is to be encrypted, the encryption unit 222 of the user terminal 200 encrypts the authentication message to be transmitted based on an encryption key. In mode 2 of the authentication server 400, as the authentication message comprises a user identifier and the part(s) of the authentication message other than the user identifier are to be encrypted, the encryption unit 222 of the user terminal 200 encrypts the part(s) of the authentication message to be transmitted other than the user identifier based on an encryption key. In mode 3 of the authentication server 400, as the authentication message does not comprise any user identifier but is to comprise a digital signature, the digital signature generator 224 of the user terminal 200 generates a digital signature based on a private key where the authentication message to be transmitted is to comprise the digital signature. The generated digital signature is to be used to verify the data integrity of the part(s) of the authentication message to be transmitted other than the digital signature. The authentication message generator 220 incorporates into the authentication message to be transmitted the digital signature. In mode 4 of the authentication server 400, as the authentication message comprises a user identifier and is to comprise a digital signature, the digital signature generator 224 of the user terminal 200 generates a digital signature based on a private key where the authentication message to be transmitted is to comprise the digital signature. The generated digital signature is to be used to verify the data integrity of the part(s) of the authentication message to be transmitted other than the digital signature or the part(s) of the authentication message to be transmitted other than the digital signature and the user identifier. The authentication message generator 220 incorporates into the authentication message to be transmitted the digital signature. Preferably, the encryption key comprises a first part and/or a second part where the first part is pre-stored in the memory 230, and the second part is the information inputted into the user terminal 200 by the user through the user interface 260 before the encryption unit 222 conducts encryption or the hash of such inputted information. The hash is generated by the hash generator 280 based on the information inputted by the user. The encryption can adopt any encryption techniques. The present invention imposes no limitation in this aspect. For example, a symmetrical key system or an asymmetrical key system can be used. For an asymmetrical key system, the encryption key and the corresponding decryption key are the private and public keys respectively or vice versa. Technical persons in the art know that for a symmetrical key system, the encryption key and the corresponding decryption key are the same key.

Preferably, the private key comprises a first part and/or a second part where the first part is pre-stored in the memory 230, and the second part is the information inputted through the user interface 260 into the user terminal 200 by the user before the digital signature generator 224 generates the digital signature or the hash of such inputted information. For the digital signature, any digital signature technique(s) or any technique(s) with an effect(s) similar to that/those of digital signature technique(s) can be adopted. The present invention imposes no limitation in this aspect. For example, a Schnorr digital signature(s), etc. can be used. As another example, a message authentication code(s), etc. whose effect(s) is similar to that/those of traditionally perceived digital signature technique(s), can be used. In that case, the private key and the corresponding public key are the same. As another example, an encrypted message integrity code(s), etc. whose effect(s) is similar to that/those of digital signature technique(s), can be used. In that case, the private key and the corresponding public key are respectively an encryption key for encryption and a corresponding decryption key for decryption. All the above techniques can be considered as examples of the broadly defined digital signature techniques referred to in this description.

Most existing digital signature techniques use the techniques of hashes, public keys, and private keys. Preferably, the digital signature technique(s) adopted in the present invention may use various techniques to generate hash(es), public key(s), and private key(s), and the logical operation(s) in respect of the hash(es), the public key(s), and private key(s) can be complicated or relatively simple. Thus, preferably, the digital signature generator 224 of the present invention in essence comprises the capability to generate hash(es).

Subsequently, the two implementation schemes above of the present invention conduct different steps.

In the first implementation scheme of the present invention, preferably, the non-contact communication transmitter 212 of the user terminal 200 transmits the authentication instruction (comprising the authentication message to be transmitted) to the non-contact communication receiver 312 of the authentication front-end computer system 300 through non-contact communication. Alternatively, the display unit 214 of the user terminal 200 displays the authentication instruction (comprising the authentication message to be transmitted) in a textual and/or machine-readable format, which is to be read by the reader 314 of the authentication front-end computer system 300. For the textual format, the authentication instruction(s) can also be directly inputted by the user into the authentication front-end computer system 300 through the user interface 340 of the authentication front-end computer system 300.

After the receiver 310 or the user interface 340 of the authentication front-end computer system 300 receives the authentication instruction, the authentication request generator 320 generates an authentication request comprising the received authentication message. In any mode of the authentication server 400, if the received authentication message does not comprise an operator account identifier and an operator identifier, the authentication request generator 320 incorporates into the authentication request the operator account identifier or the operator identifier stored in the memory 350. In any mode of the authentication server 400, if the received authentication message does not comprise an amount, the authentication request generator 320 incorporates into the authentication request the amount stored in the memory 350.

Subsequently, the transmitter 330 of the authentication front-end computer system 300 transmits the authentication request to a specific authentication server 400 through the communication network 120. If any mode of the authentication server 400 is combined with the following additional feature: the authentication instruction comprises the identifier of an authentication server 400, the identifier of the authentication server 400 in the authentication instruction received by the receiver 310 or the user interface 340 of the authentication front-end computer system 300 is used to identify the specific authentication server 400. Otherwise, in any mode of the authentication server 400, the identifier of the authentication server 400 pre-stored in the memory 350 of the authentication front-end computer system 300 is used to identify the specific authentication server 400.

In the second implementation scheme of the present invention, the transmitting device 210 of the user terminal 200 transmits an authentication request (comprising the authentication message to be transmitted) to a specific authentication server 400 through the communication network 110. Preferably, the memory 230 in the user terminal 200 pre-stores the identifier of an authentication server 400, which is used to identify the specific authentication server 400. Alternatively, the memory 230 in the user terminal 200 pre-stores at least one identifier of an authentication server 400. Through the user interface 260, the user chooses from the stored identifier(s) of authentication server(s) 400. The chosen identifier of an authentication server 400 is used to identify the specific authentication server 400. The user chooses the identifier of the corresponding authentication server 400 according to the user payment account. Alternatively, the user, according to the type of the user payment account (e.g., a type includes all the user payment accounts with a bank), chooses the identifier of the corresponding authentication server 400 (e.g., the identifier of the authentication server 400 of this bank). Alternatively, the user inputs the identifier of an authentication server 400 through the user interface 260. The inputted identifier of an authentication server 400 is used to identify the specific authentication server 400. The user inputs the identifier of the corresponding authentication server 400 according to the user payment account. Alternatively, the user inputs the identifier of the corresponding authentication server 400 according to the type of the user payment account.

In any of the two implementation schemes above of the present invention, the receiver 410 of the authentication server 400 receives the authentication request comprising the authentication message. In mode 1, as the authentication message does not comprise a user identifier and the authentication message is encrypted, the memory 470 pre-stores a decryption key used to decrypt the encrypted authentication message. After the receiver 410 receives the authentication request, the decryption unit 422 uses the decryption key to decrypt the received, encrypted authentication message, and the authentication continues through conducting other authentication step(s). In mode 2, as the authentication message comprises a user identifier and the part(s) of the authentication message other than the user identifier are encrypted, the memory 470 pre-stores user identifier(s) and the corresponding decryption key(s) used to decrypt the encrypted part(s) in the authentication message. After the receiver 410 receives the authentication request, based on the user identifier in the received authentication message, the search unit 424 searches the memory 470 for the decryption key used to decrypt. If the search fails, the authentication fails. Otherwise, if the search succeeds, the decryption unit 422 uses the decryption key so retrieved to decrypt the encrypted part(s) of the received authentication message, and the authentication continues through conducting other authentication step(s). In mode 3, as the authentication message does not comprise a user identifier but comprises a digital signature, the memory 470 pre-stores the public key used to verify the data integrity of the part(s) of the authentication message other than the digital signature. After the receiver 410 receives the authentication request, based on the public key and the digital signature, the verification unit 428 verifies the data integrity of the part(s) of the received authentication message other than the digital signature. If it is verified that the data integrity is not maintained, the authentication fails. Otherwise, if it is verified that the data integrity is maintained, the authentication continues through conducting other authentication step(s). In mode 4, as the authentication message comprises a user identifier and a digital signature, the memory 470 pre-stores user identifier(s) and the corresponding public key(s) used to verify the data integrity of the part(s) of the authentication message other than the digital signature or the part(s) of the authentication message other than the digital signature and the user identifier. After the receiver 410 receives the authentication request, based on the user identifier in the received authentication message, the search unit 424 searches the memory 470 for the public key used for verification. If the search fails, the authentication fails. Otherwise, if the search succeeds, based on the public key so retrieved, the verification unit 428 verifies the data integrity of the part(s) of the received authentication message other than the digital signature or the part(s) of the received authentication message other than the digital signature and the user identifier. If it is verified that the data integrity is not maintained, the authentication fails. Otherwise, if it is verified that the data integrity is maintained, the authentication continues through conducting other authentication step(s). In mode 5 or mode 6, the authentication continues through conducting other authentication step(s).

Subsequently, the other authentication step(s) are detailed as follows. Mode 1, mode 2, mode 3, or mode 4 can be combined with the following additional feature: the authentication message comprises the time of the authentication message's generation. In that case, any of the three time comparison procedures can be adopted. According to time comparison procedure 1, the comparison unit 426 of the authentication server 400 compares the time in the authentication message currently received with the current real time generated by the real-time clock 440. If the difference between the times compared is greater than a predetermined threshold, the authentication fails. Otherwise, if the difference between the times compared is not greater than the predetermined threshold, the authentication succeeds. According to time comparison procedure 2, the comparison unit 426 of the authentication server 400 compares the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the authentication succeeds. According to time comparison procedure 3, the comparison unit 426 of the authentication server 400 compares the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 further compares the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the authentication succeeds. Mode 5, or mode 1, mode 2, mode 3, or mode 4 can be combined with the following additional feature: the authentication message comprises a rolling code. In that case, the comparison unit 426 of the authentication server 400 compares the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds.

Mode 1, mode 2, mode 3, or mode 4 can be combined with the following additional feature: the authentication message comprises the time of the authentication message's generation and a rolling code. In that case, any of the three time comparison procedures can be adopted. According to time comparison procedure 1, the comparison unit 426 of the authentication server 400 compares the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 further compares the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds. According to time comparison procedure 2, the comparison unit 426 of the authentication server 400 compares the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the comparison unit 426 further compares the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds. According to time comparison procedure 3, the comparison unit 426 of the authentication server 400 compares the time in the authentication message currently received with the current real time generated by the real-time clock 440. If the difference between the times compared is greater than a predetermined threshold, the authentication fails. Otherwise, if the difference between the times compared is not greater than the predetermined threshold, the comparison unit 426 further compares the authentication message currently received with the authentication message(s) received previously and stored in the memory 470. If at least one of the authentication message(s) previously received is identical to the authentication message currently received, the authentication fails. Otherwise, if none of the authentication message(s) previously received is identical to the authentication message currently received, the comparison unit 426 further compares the rolling code in the authentication message currently received with the corresponding rolling code(s) generated by the rolling code generator 450. If the rolling code in the authentication message currently received is not equal to any of the corresponding rolling code(s) generated by the rolling code generator 450, the authentication fails. Otherwise, if the rolling code in the authentication message currently received is equal to at least one of the corresponding rolling code(s) generated by the rolling code generator 450, the authentication succeeds. In mode 6, as the authentication message comprises a user identifier and user identity information, the memory 470 of the authentication server 400 pre-stores the user identifier(s) and the corresponding user identity information. After the receiver 410 receives the authentication request, based on the user identifier in the received authentication message, the search unit 424 searches the memory 470 for the corresponding user identity information. The comparison unit 426 compares the user identity information so retrieved with the user identity information in the received authentication message. If at least one piece of user identity information so retrieved is identical to the user identity information in the received authentication message, the authentication succeeds. Otherwise, the authentication fails. The rolling code generated by the rolling code generator 450 may but may not necessarily be associated with the user identifier, if any, in the authentication message currently received.

Preferably, after successful authentication, the authentication unit 420 of the authentication server 400 pays a specific amount by transferring from a specific user payment account to a specific operator account.

Any mode above can be combined with the following additional feature: the authentication message comprises user identity information in turn comprising a user payment account identifier. In that case, the user payment account identifier in the user identity information in the authentication message currently received by the authentication server 400 is used to identify the specific user payment account. Otherwise, in any mode above, preferably, the specific user payment account is the default user payment account. Alternatively, the memory 470 of the authentication server 400 pre-stores a user payment account identifier, which is used to identify the specific user payment account. In some of the modes above (e.g., in mode 2, mode 4 or mode 6, or in mode 5 combined with the following additional feature: the authentication message comprises a user identifier), the authentication message comprises a user identifier. Preferably, the specific user payment account is the default user payment account. Alternatively, the memory 470 of the authentication server 400 pre-stores user identifier(s) and the corresponding user payment account identifier(s). After the receiver 410 receives the authentication request, based on the user identifier in the received authentication message, the search unit 424 searches the memory 470 for the corresponding user payment account identifier used to identify the specific user payment account.

Any mode above can be combined with the following additional feature: the authentication message or authentication request comprises an operator account identifier, In that case, the operator account identifier in the authentication message or authentication request currently received by the authentication server 400 is used to identify the specific operator account. Any mode above can be combined with the following additional feature: the authentication message or authentication request comprises an operator identifier. In that case, the memory 470 of the authentication server 400 pre-stores an operator identifier(s) and the corresponding operator account identifier(s). After the receiver 410 receives the authentication request, based on the operator identifier in the received authentication message or authentication request, the search unit 424 searches the memory 470 for the corresponding operator account identifier used to identify the specific operator account. Otherwise, in any mode above, preferably, the specific operator account is the default operator account. Alternatively, the memory 470 pre-stores an operator account identifier, which is used to identify the specific operator account.

Any mode above can be combined with the following additional feature: the authentication message or authentication request comprises an amount. In that case, the specific amount is the amount in the authentication message or authentication request currently received by the authentication server 400. Otherwise, in any mode above, preferably, the memory 470 of the authentication server 400 pre-stores an amount. The specific amount is the amount stored in the memory 470. In some modes above (e.g., in mode 2, mode 4, mode 6, or mode 5 combined with the following additional feature: the authentication message comprises a user identifier), the authentication message comprises a user identifier. Preferably, the memory 470 of the authentication server 400 pre-stores a user identifier(s) and the corresponding amount(s). After the receiver 410 receives the authentication request, based on the user identifier in the received authentication message, the search unit 424 searches the memory 470 for the corresponding amount. The specific amount is the amount so retrieved.

Finally, whether the authentication succeeds or fails, preferably, the transmitter 430 of the authentication server 400 transmits an authentication result to the authentication front-end computer system 300 through the communication network 120. Preferably, the authentication result comprises the success of the authentication or the failure of the authentication. Preferably, the authentication result comprises the information on the success or failure of payment and/or the amount paid. Preferably, the transmitter 330 of the authentication front-end computer system 300 further transmits the authentication result received by the receiver 310 to the receiver 270 of the user terminal 200 through the communication network 110. Preferably, the transmitter 430 transmits the authentication result to the receiver 270 of the user terminal 200 directly through the communication network 110.

If the authentication message comprises the time of the authentication message's generation, when the user is queuing for payment (or ticket authentication), the user may issue a payment (or ticket authentication) command in advance to the user terminal 200 in order to be able to conduct payment (or ticket authentication) immediately without delay upon the user's turn. Such a command issuance results in the authentication message generator 220 of the user terminal 200 generating authentication messages at predetermined intervals until the turn of the user comes when the user interface 260 of the user terminal 200 receives the user's command to transmit an authentication instruction comprising the most recently generated authentication message to the authentication front-end computer system 300 or until the turn of the user comes when the user interface 260 of the user terminal 200 receives the user's command to transmit an authentication request comprising the most recently generated authentication message to the authentication server 400. Each authentication message generated comprises the time of the corresponding authentication message's generation. After receiving the command to transmit the authentication instruction, the transmitting device 210 of the user terminal 200 transmits the authentication instruction comprising the most recently generated authentication message to the authentication front-end computer system 300 or after receiving the command to transmit the authentication request, the transmitting device 210 of the user terminal 200 transmits the authentication request comprising the most recently generated authentication message to the authentication server 400.

Mode 1, mode 2, mode 3, or mode 4 can be combined with the following additional features: the authentication message comprises the time of the authentication message's generation or the authentication message comprises the time of the authentication message's generation and a rolling code, and the time comparison procedure 3 is adopted. In that case, the memory 470 of the authentication server 400 further stores the authentication message in the authentication request received each time. Preferably, when the time in an authentication message stored in the memory 470 is earlier than the current real time generated by the real-time clock 440 by more than the predetermined threshold, the corresponding stored authentication message is deleted from the memory 470.

Preferably, in order to strengthen the accuracy and/or confidentiality of the above transmission, error detection and correction (for example, error correction code, etc.) and/or additional encryption and decryption are added to the above transmission.

Except for the following aspects, the preferred embodiment in which a user conducts ticket authentication for a ticket with an operator is exactly the same as the above preferred embodiment in which a user pays an amount to an operator by transferring from his/her user payment account: The user payment account in the payment embodiment is changed to the ticket in the ticket authentication embodiment. The user payment account identifier of the user payment account in the payment embodiment is changed to the ticket identifier of the ticket in the ticket authentication embodiment. The ticket authentication embodiment has no operator account, operator account identifier, and operator identifier, and has no comprising, storage, input, other processing and/or other apparatus relating to operator account identifier(s) and/or operator identifier(s). The ticket authentication embodiment has no amount, and has no comprising, storage, input, other processing and/or other apparatus related to amount(s). After successful authentication in the ticket authentication embodiment, the authentication unit 420 allows the user to exercise a specific ticket(s). In contrast, after successful authentication in the payment embodiment, the authentication unit 420 pays a specific amount(s) to a specific operator account(s) by transferring from a specific user payment account(s). Also, the authentication result in the ticket authentication embodiment does not comprise the information on the success or failure of payment and/or the amount(s) paid in the payment embodiment, but preferably comprises the information on the ticket(s). Preferably, in its implementation, the allowing of the user to exercise a specific ticket(s) is delegated by the authentication unit 420 to the authentication front-end computer system 300 through the communication network 120. For example, the authentication front-end computer system 300 commands an actuator to open a door or gate to allow the user to pass. Preferably, when an operator gives a user one or more rights and/or identities, the authentication front-end computer system 300 of the operator transmits the ticket identifier corresponding to the right(s) and/or identity(ies) to the user terminal 200 of the user through non-contact communication or contact communication. The non-contact communication or contact communication includes going through the communication network 110, for example, by means of short message service (SMS), enhanced message service (EMS), Multimedia Messaging Service (MMS), downloading, etc. Alternatively, when an operator gives a user one or more rights and/or identities, the authentication front-end computer system 300 of the operator displays the ticket identifier in a textual and/or machine-readable format, which is to be read by the user terminal 200 of the user or is to be read and inputted into the user terminal 200 by the user through the user interface 260 of the user terminal 200.

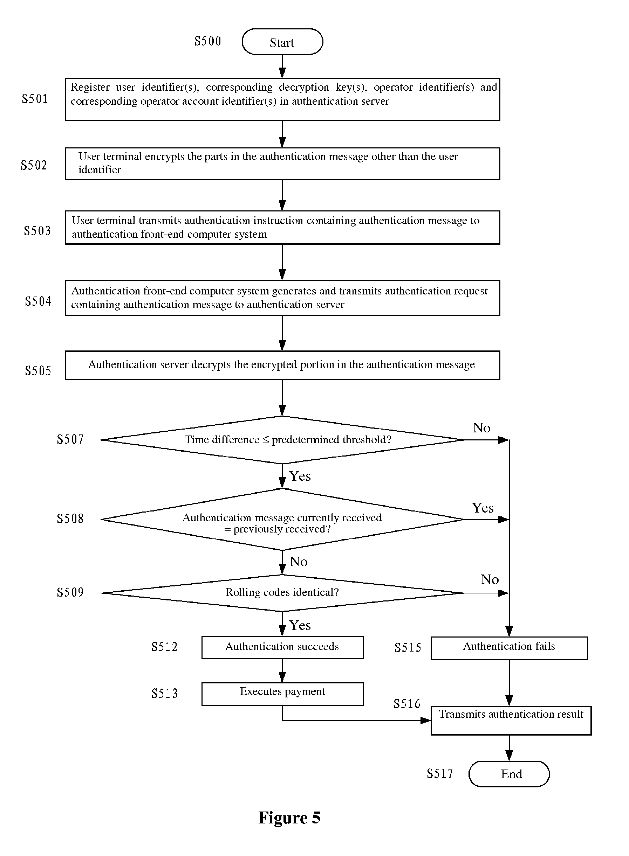

Figure 5 is a flow chart illustrating a method used for authenticating user identity according to one embodiment of the present invention. In this embodiment, a user pays an amount to an operator by transferring from the user's user payment account. This embodiment corresponds to mode 2 of the authentication server 400 combined with the following additional features: the authentication message comprises user identity information (in turn comprising a user payment account identifier), the time of the authentication message's generation, and a rolling code, the authentication instruction comprises the identifier of an authentication server 400, and the authentication request comprises an operator identifier and an amount. Also, time comparison procedure 3 is adopted. The authentication server 400 transmits the authentication result to the authentication front-end computer system 300. In addition, the authentication server 400 directly transmits the authentication result to the user terminal 200 but not transmits the authentication result to the user terminal 200 through the authentication front-end computer system 300 as an intermediate node.

According to the authentication method of this embodiment, the method begins at step S500. Then at step S501, user identifier(s) and the corresponding decryption key(s) are associated with each other and registered in the authentication server 400. Also, operator identifier(s) and the corresponding operator account identifier(s) are associated with each other and registered in the authentication server 400. Then at step S502, the user terminal 200 generates an authentication message comprising the following parts: a user identifier, user identity information, the current real time of the authentication message's generation, and a rolling code, and encrypts the part(s) of the authentication message other than the user identifier where the encryption key for encryption comprises a first part and/or a second part. The first part is pre-stored in the memory 230. The second part is the information inputted into the user interface 260 by the user or a hash of such inputted information. In this embodiment, the user identity information comprises the user payment account identifier of the user payment account. As described above in detail, the real time and rolling code are respectively generated by the real-time clock 240 and the rolling code generator 250 of the user terminal 200. Then at step S503, the user terminal 200 incorporates into an authentication instruction the partially encrypted authentication message and the identifier of the authentication server 400 used to authenticate user identity and transmits the authentication instruction to the authentication front-end computer system 300. After receiving the authentication instruction, at step S504, the authentication front-end computer system 300 generates an authentication request comprising the partially encrypted authentication message, an operator identifier, and an amount payable, and transmits the authentication request through the communication network 120 to the authentication server 400 identified by the identifier of the authentication server 400. The operator identifier in the authentication request identifies the operator.

Then, the authentication server 400 receives the authentication request and authenticates user identity according to the authentication message in the authentication request. First, at step S505, the authentication server 400 extracts from the authentication request the partially encrypted authentication message, the operator identifier, and the amount. Then, based on the unencrypted user identifier in the partially encrypted authentication message, the authentication server 400 searches its memory 470 for the decryption key used to decrypt the encrypted part(s) in the authentication message. The authentication server 400 uses the decryption key so retrieved to decrypt the encrypted part(s) in the authentication message in order to obtain the decrypted authentication message. After decryption, at step S507, the comparison unit 426 of the authentication server 400 compares the time in the authentication message with the current real time generated by the real-time clock 440 of the authentication server 400. If the difference between the times compared is greater than a predetermined threshold, the authentication fails at step S515. Otherwise, if the difference between the times compared is not greater than the predetermined threshold, step S508 begins. At step S508, the comparison unit 426 of the authentication server 400 compares the authentication message currently received with the authentication message(s) that is in the authentication request(s) received previously and is stored in the memory 470 of the authentication server 400. If at least one of the authentication message(s) previously received is identical to the authentication message currently received, the authentication fails at step S515. Otherwise, if none of the authentication message(s) previously received is identical to the authentication message currently received, step S509 begins. At step S509, the comparison unit 426 of the authentication server 400 compares the rolling code in the authentication message currently received with the corresponding rolling code(s) generated by the rolling code generator 450 of the authentication server 400. If the rolling code in the authentication message currently received is not equal to any of the corresponding rolling code(s) generated by the rolling code generator 450, the authentication fails at step S515. Otherwise, if the rolling code in the authentication message currently received is equal to at least one of the corresponding rolling code(s) generated by the rolling code generator 450, the authentication succeeds at step S512, and then step S513 begins. The rolling code generated by the rolling code generator 450 as described above may optionally be associated with the user identifier in the authentication message currently received. At step S513, based on the operator identifier in the authentication request currently received, the search unit 424 of the authentication server 400 searches the memory 470 of the authentication server 400 for the corresponding operator account identifier. The authentication unit 420 of the authentication server 400 pays the amount in the authentication request currently received to the operator account identified by the operator account identifier so retrieved by transferring from the user payment account identified by the user payment account identifier in the authentication message in the authentication request currently received. Then, step S516 begins.

When going from step S513 to step S516, the transmitter 430 of the authentication server 400 transmits an authentication result of successful authentication to the authentication front-end computer system 300 through the communication network 120. The authentication result comprises the information on the success or failure of payment and/or the amount paid. The transmitter 430 further transmits the authentication result directly to the user terminal 200 through the communication network 110. Then, the method ends at step S517. In contrast, when going from step S515 to step S516, the transmitter 430 of the authentication server 400 transmits an authentication result of failed authentication to the authentication front-end computer system 300 through the communication network 120. The transmitter 430 further transmits the authentication result directly to the user terminal 200 through the communication network 110. Then the method ends at step S517.

It should be noted that the above steps S507 to S509 are the time verification, duplication verification, and rolling code verification of the authentication message. The verification steps of the above step S505 and the above steps S507 to S509 are not necessarily conducted in the order shown in Figure 5. The above four steps may be in any order, as long as step S505 precedes steps S507 and S509. Such arbitrary order should be interpreted as being included in the protection scope of the claims of the present invention.

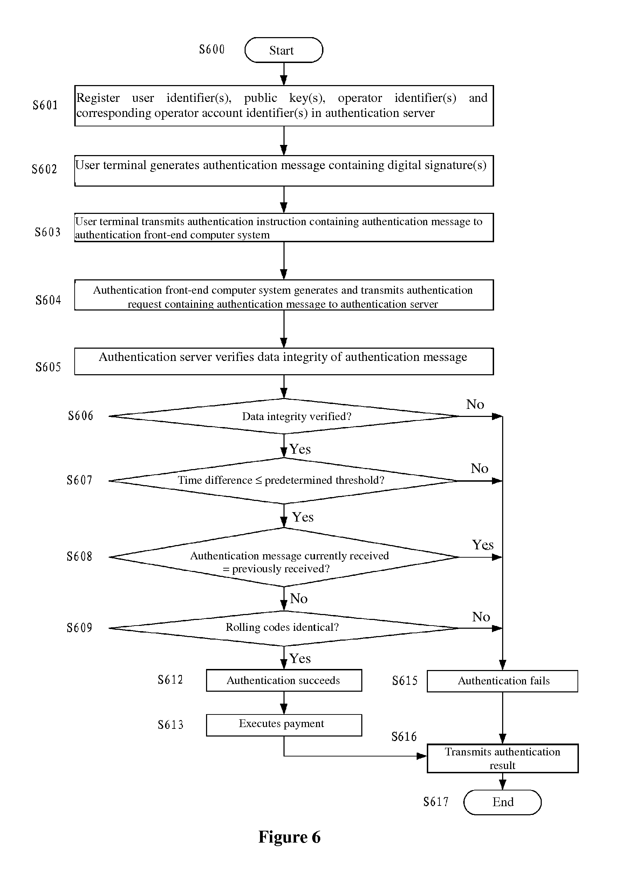

Figure 6 is a flow chart illustrating a method used for authenticating user identity according to another embodiment of the present invention. In this embodiment, a user pays an amount to an operator by transferring from the user's user payment account. This embodiment corresponds to mode 4 of the authentication server 400 combined with the following additional features: the authentication message comprises user identity information (in turn comprising an user payment account identifier), the time of the authentication message's generation, and a rolling code, the authentication instruction comprises the identifier of an authentication server 400, and the authentication request comprises an operator identifier and an amount. Also, time comparison procedure 3 is adopted. The authentication server 400 transmits the authentication result to the authentication front-end computer system 300. In addition, the authentication server 400 directly transmits the authentication result to the user terminal 200 but not transmits the authentication result to the user terminal 200 through the authentication front-end computer system 300 as an intermediate node. In other words, the only difference from Figure 5 is that this embodiment adopts a digital signature but does not necessarily encrypt part of the authentication message.

According to the authentication method of this embodiment, the method begins at step S600. Then at step S601, user identifier(s) and the corresponding public key(s) are associated with each other and registered in the authentication server 400. Also, operator identifier(s) and the corresponding operator account identifier(s) are associated with each other and registered in the authentication server 400. Then at step S602, the user terminal 200 generates an authentication message comprising the following parts: a user identifier, user identity information, the current real time of the authentication message's generation, a rolling code, and a digital signature where the private key used to generate the digital signature comprises a first part and/or a second part. The first part is pre-stored in the memory 230. The second part is the information inputted into the user interface 260 by the user or a hash of such inputted information. In this embodiment, the user identity information comprises the user payment account identifier of the user payment account. As described above in detail, the real time, rolling code, and digital signature are respectively generated by the real-time clock 240, the rolling code generator 250, and the digital signature generator 224 of the user terminal 200. Then at step S603, the user terminal 200 incorporates into the authentication instruction the authentication message (in turn comprising the digital signature) and the identifier of the authentication server 400 used to authenticate user identity and transmits the authentication instruction to the authentication front-end computer system 300. After receiving the authentication instruction, at step S604, the authentication front-end computer system 300 generates an authentication request comprising the authentication message, an operator identifier, and an amount payable and transmits the authentication request through the communication network 120 to the authentication server 400 identified by the identifier of the authentication server 400. The operator identifier in the authentication request identifies the operator.

Then, the authentication server 400 receives the authentication request and authenticates user identity according to the authentication message in the authentication request. First, at step S605, the authentication server 400 extracts from the authentication request the authentication message, the operator identifier, and the amount. Then, based on the user identifier in the authentication message, the authentication server 400 searches its memory 470 for the public key used to verify the data integrity of the part(s) of the authentication message other than the digital signature or the part(s) of the authentication message other than the digital signature and the user identifier. The authentication server 400 uses the public key so retrieved and the digital signature to verify the data integrity of the part(s) of the authentication message other than the digital signature or the part(s) of the authentication message other than the digital signature and the user identifier. If it is verified that the data integrity is not maintained, the authentication fails at step S615. Otherwise, if it is verified that the data integrity is maintained, step S607 begins. At step S607, the comparison unit 426 of the authentication server 400 compares the time in the authentication message with the current real time generated by the real-time clock 440 of the authentication server 400. If the difference between the times compared is greater than a predetermined threshold, the authentication fails at step S615. Otherwise, if the difference between the times compared is not greater than the predetermined threshold, step S608 begins. At step S608, the comparison unit 426 of the authentication server 400 compares the authentication message currently received with the authentication message(s) that is in the authentication request(s) received previously and is stored in the memory 470 of the authentication server 400. If at least one of the authentication message(s) previously received is identical to the authentication message currently received, the authentication fails at step S615. Otherwise, if none of the authentication message(s) previously received is identical to the authentication message currently received, step S609 begins. At step S609, the comparison unit 426 of the authentication server 400 compares the rolling code in the authentication message currently received with the corresponding rolling code(s) generated by the rolling code generator 450 of the authentication server 400. If the rolling code in the authentication message currently received is not equal to any of the corresponding rolling code(s) generated by the rolling code generator 450, the authentication fails at step S615. Otherwise, if the rolling code in the authentication message currently received is equal to at least one of the corresponding rolling code(s) generated by the rolling code generator 450, the authentication succeeds at step S612, and then step S613 begins. The rolling code generated by the rolling code generator 450 as describe above may optionally be associated with the user identifier in the authentication message currently received. At step S613, based on the operator identifier in the authentication request currently received, the search unit 424 of the authentication server 400 searches the memory 470 of the authentication server 400 for the corresponding operator account identifier. The authentication unit 420 of the authentication server 400 pays the amount in the authentication request currently received to the operator account identified by the operator account identifier so retrieved by transferring from the user payment account identified by the user payment account identifier in the authentication message in the authentication request currently received. Then, step S616 begins.

When going from step S613 to step S616, the transmitter 430 of the authentication server 400 transmits an authentication result of successful authentication to the authentication front-end computer system 300 through the communication network 120. The authentication result comprises the information on the success or failure of payment and/or the amount paid. The transmitter 430 further transmits the authentication result directly to the user terminal 200 through the communication network 110. Then, the method ends at step S617. In contrast, when going from step S615 to step S616, the transmitter 430 of the authentication server 400 transmits an authentication result of failed authentication to the authentication front-end computer system 300 through the communication network 120. The transmitter 430 further transmits the authentication result directly to the user terminal 200 through the communication network 110. Then, the method ends at step S617.

It should be noted that the above steps S606 to S609 are the integrity verification, time verification, duplication verification, and rolling code verification of the authentication message. The verification steps of the above step S605 and the above steps S606 to S609 are not necessarily conducted in the order shown in Figure 6. The above five steps may be in any order, as long as step S605 precedes step S606. Such arbitrary order should be interpreted as being included in the protection scope of the claims of the present invention.

According to another implementation scheme of the present invention, the user terminal 200 directly transmits an authentication request comprising an authentication message to the authentication server 400, without going through the authentication front-end computer system 300, which otherwise generates an authentication request based on an authentication instruction and then transmits the authentication request to the authentication server 400. After authenticating user identity, preferably, the authentication server 400 transmits the authentication result to the authentication front-end computer system 300 and/or to the user terminal 200. The method for the user terminal 200 to generate authentication message(s) is basically the same as that of the implementation scheme described above. The method for the authentication server 400 to authenticate user identity according to the authentication message(s) is the same as that of the implementation scheme described above.

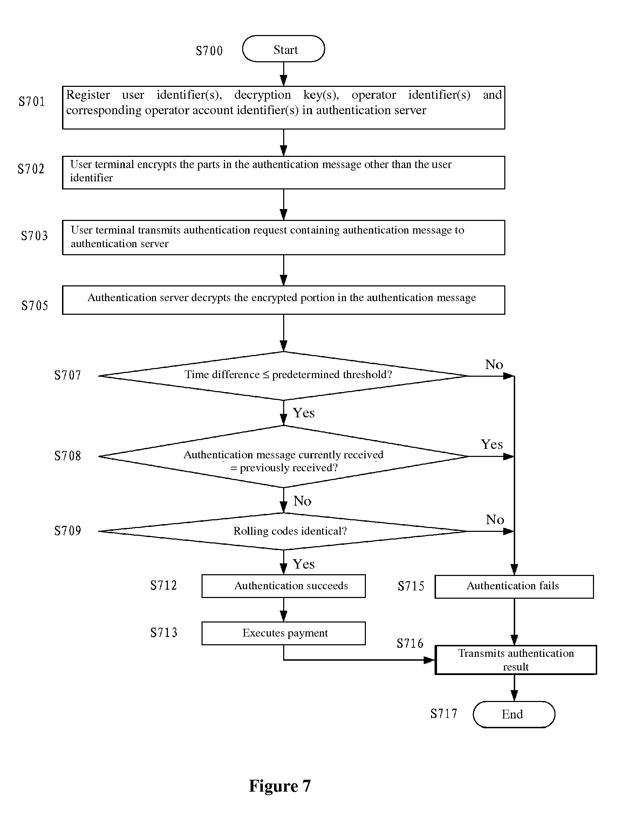

Figure 7 is a flow chart illustrating a method used for authenticating user identity according to the third embodiment of the present invention. In this embodiment, a user pays an amount to an operator by transferring from the user's user payment account. According to the authentication method of this embodiment, the method begins at step S700. Then at step S701, user identifier(s) and the corresponding decryption key(s) are associated with each other and registered in the authentication server 400. Also, operator identifier(s) and the corresponding operator account identifier(s) are associated with each other and registered in the authentication server 400. Then at step S702, the user terminal 200 generates an authentication message comprising the following parts: a user identifier, user identity information, the current real time of the authentication message's generation, a rolling code, an operator identifier, and an amount payable, and encrypts the part(s) of the authentication message other than the user identifier where the operator identifier identifies the operator. The encryption key for encryption comprises a first part and/or a second part. The first part is pre-stored in the memory 230. The second part is the information inputted into the user interface 260 by the user or a hash of such inputted information. In this embodiment, the user identity information comprises the user payment account identifier of the user payment account. As described above in detail, the real time and rolling code are respectively generated by the real-time clock 240 and the rolling code generator 250 of the user terminal 200. Then at step S703, the user terminal 200 incorporates into an authentication request the partially encrypted authentication message and transmits the authentication request to the authentication server 400 through the communication network 110.

Then, the authentication server 400 receives the authentication request and authenticates user identity according to the authentication message in the authentication request. First, at step S705, the authentication server 400 extracts from the authentication request the partially encrypted authentication message. Then, based on the unencrypted user identifier in the partially encrypted authentication message, the authentication server 400 searches its memory 470 for the decryption key used to decrypt the encrypted part(s) of the authentication message. The authentication server 400 uses the decryption key so retrieved to decrypt the encrypted part(s) of the authentication message in order to obtain the decrypted authentication message. After decryption, at step S707, the comparison unit 426 of the authentication server 400 compares the time in the authentication message with the current real time generated by the real-time clock 440 of the authentication server 400. If the difference between the times compared is greater than a predetermined threshold, the authentication fails at step S715. Otherwise, if the difference between the times compared is not greater than the predetermined threshold, step S708 begins. At step S708, the comparison unit 426 of the authentication server 400 compares the authentication message currently received with the authentication message(s) that is in the authentication request(s) received previously and is stored in the memory 470 of the authentication server 400. If at least one of the authentication message(s) previously received is identical to the authentication message currently received, the authentication fails at step S715. Otherwise, if none of the authentication message(s) previously received is identical to the authentication message currently received, step S709 begins. At step S709, the comparison unit 426 of the authentication server 400 compares the rolling code in the authentication message currently received with the corresponding rolling code(s) generated by the rolling code generator 450 of the authentication server 400. If the rolling code in the authentication message currently received is not equal to any of the corresponding rolling code(s) generated by the rolling code generator 450, the authentication fails at step S715. Otherwise, if the rolling code in the authentication message currently received is equal to at least one of the corresponding rolling code(s) generated by the rolling code generator 450, the authentication succeeds at step S712, and then step S713 begins. The rolling code(s) generated by the rolling code generator 450 as described above may optionally be associated with the user identifier in the authentication message currently received. At step S713, based on the operator identifier in the authentication message in the authentication request currently received, the search unit 424 of the authentication server 400 searches the memory 470 of the authentication server 400 for the corresponding operator account identifier. The authentication unit 420 of the authentication server 400 pays the amount in the authentication message in the authentication request currently received to the operator account identified by the operator account identifier so retrieved by transferring from the user payment account identified by the user payment account identifier in the authentication message in the authentication request currently received. Then, step S716 begins.

When going from step S713 to step S716, the transmitter 430 of the authentication server 400 transmits an authentication result of successful authentication to the authentication front-end computer system 300 through the communication network 120. The authentication result comprises the information on the success or failure of payment and/or the amount paid. The transmitter 430 further transmits the authentication result directly to the user terminal 200 through the communication network 110. Then, the method ends at step S717. In contrast, when going from step S715 to step S716, the transmitter 430 of the authentication server 400 transmits an authentication result of failed authentication to the authentication front-end computer system 300 through the communication network 120. The transmitter 430 further transmits the authentication result directly to the user terminal 200 through the communication network 110. Then, the method ends at step S717.

It should be noted that the above steps S707 to S709 are the time verification, duplication verification, and rolling code verification of the authentication message. The verification steps of the above step S705 and the above steps S707 to S709 are not necessarily conducted in the order shown in Figure 7. The above four steps may be in any order, as long as step S705 precedes steps S707 and S709. Such arbitrary order should be interpreted as being included in the protection scope of the claims of the present invention.

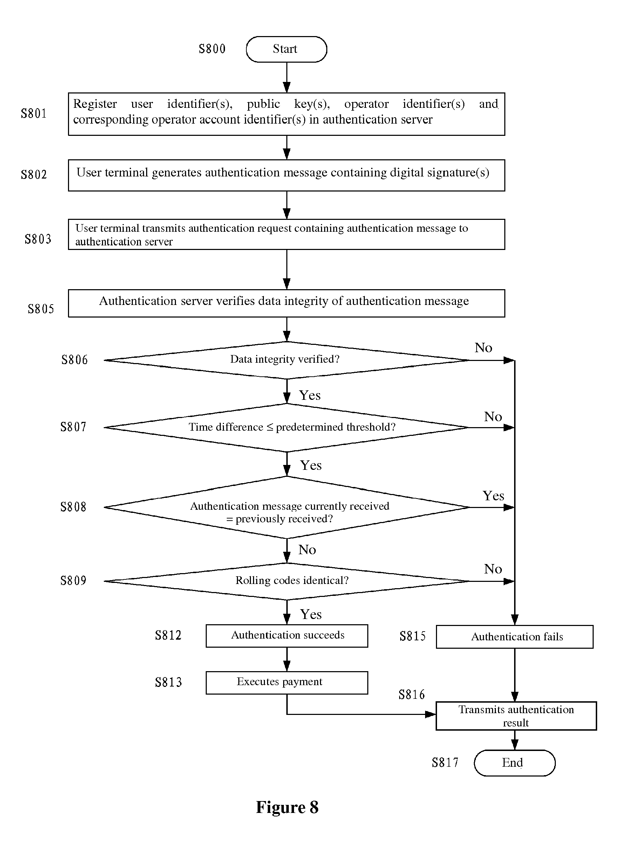

Figure 8 is a flow chart illustrating a method used for authenticating user identity according to the fourth embodiment of the present invention. In this embodiment, a user pays an amount to an operator by transferring from the user's user payment account. This embodiment differs from the third embodiment in that this embodiment adopts a digital signature but does not necessarily encrypt part of the authentication message.

According to the authentication method of this embodiment, the method begins at step S800. Then at step S801, user identifier(s) and the corresponding public key(s) are associated with each other and registered in the authentication server 400. Also, operator identifier(s) and the corresponding operator account identifier(s) are associated with each other and registered in the authentication server 400. Then at step S802, the user terminal 200 generates an authentication message comprising the following parts: a user identifier, user identity information, the current real time of the authentication message's generation, a rolling code, an operator identifier, an amount payable, and a digital signature where the operator identifier identifies the operator. The private key used to generate the digital signature comprises a first part and/or a second part. The first part is pre-stored in the memory 230. The second part is the information inputted into the user interface 260 by the user or a hash of such inputted information. In this embodiment, the user identity information comprises the user payment account identifier of the user payment account. As described above in detail, the real time, rolling code, and digital signature are respectively generated by the real-time clock 240, the rolling code generator 250, and the digital signature generator 224 of the user terminal 200. Then at step S803, the user terminal 200 incorporates into the authentication request the authentication message (in turn comprising the digital signature) and transmits the authentication request to the authentication server 400 through the communication network 110.

Then, the authentication server 400 receives the authentication request and authenticates user identity according to the authentication message in the authentication request. First, at step S805, the authentication server 400 extracts from the authentication request the authentication message. Then, based on the user identifier in the authentication message, the authentication server 400 searches its memory 470 for the public key used to verify the data integrity of the part(s) of the authentication message other than the digital signature or the part(s) of the authentication message other than the digital signature and the user identifier. The authentication server 400 uses the public key so retrieved and the digital signature to verify the data integrity of the part(s) of the authentication message other than the digital signature or the part(s) of the authentication message other than the digital signature and the user identifier. If it is verified that the data integrity is not maintained, the authentication fails at step S815. Otherwise, if it is verified that the data integrity is maintained, step S807 begins. At step S807, the comparison unit 426 of the authentication server 400 compares the time in the authentication message with the current real time generated by the real-time clock 440 of the authentication server 400. If the difference between the times compared is greater than a predetermined threshold, the authentication fails at step S815. Otherwise, if the difference between the times compared is not greater than the predetermined threshold, step S808 begins. At step S808, the comparison unit 426 of the authentication server 400 compares the authentication message currently received with the authentication message(s) that is in the authentication request(s) received previously and is stored in the memory 470 of the authentication server 400. If at least one of the authentication message(s) previously received is identical to the authentication message currently received, the authentication fails at step S815. Otherwise, if none of the authentication message(s) previously received is identical to the authentication message currently received, step S809 begins. At step S809, the comparison unit 426 of the authentication server 400 compares the rolling code in the authentication message currently received with the corresponding rolling code(s) generated by the rolling code generator 450 of the authentication server 400. If the rolling code in the authentication message currently received is not equal to any of the corresponding rolling code(s) generated by the rolling code generator 450, the authentication fails at step S815. Otherwise, if the rolling code in the authentication message currently received is equal to at least one of the corresponding rolling code(s) generated by the rolling code generator 450, the authentication succeeds at step S812, and then step S813 begins. The rolling code(s) generated by the rolling code generator 450 as described above may optionally be associated with the user identifier in the authentication message currently received. At step S813, based on the operator identifier in the authentication message in the authentication request currently received, the search unit 424 of the authentication server 400 searches the memory 470 of the authentication server 400 for the corresponding operator account identifier. The authentication unit 420 of the authentication server 400 pays the amount in the authentication message in the authentication request currently received to the operator account identified by the operator account identifier so retrieved by transferring from the user payment account identified by the user payment account identifier in the authentication message in the authentication request currently received. Then, step S816 begins.

When going from step S813 to step S816, the transmitter 430 of the authentication server 400 transmits an authentication result of successful authentication to the authentication front-end computer system 300 through the communication network 120. The authentication result comprises the information on the success or failure of payment and/or the amount paid. The transmitter 430 further transmits the authentication result directly to the user terminal 200 through the communication network 110. Then, the method ends at step S817. In contrast, when going from step S815 to step S816, the transmitter 430 of the authentication server 400 transmits an authentication result of failed authentication to the authentication front-end computer system 300 through the communication network 120. The transmitter 430 further transmits the authentication result directly to the user terminal 200 through the communication network 110. Then, the method ends at step S817.

It should be noted that the above steps S806 to S809 are the integrity verification, time verification, duplication verification, and rolling code verification of the authentication message. The verification steps of the above step S805 and the above steps S806 to S809 are not necessarily conducted in the order shown in Figure 8. The above five steps may be in any order, as long as step S805 precedes step S806. Such arbitrary order should be interpreted as being included in the protection scope of the claims of the present invention.

The preferred embodiments and the specific application implementations of the present invention are described above with reference to the drawings. However, it should be recognized that the above description is only the preferred embodiments of the present invention. The present invention is not limited to the above embodiments. When a skilled person in the art implements the invention of which protection is requested, he/she should be able to understand and implement other improvements and variations of the open embodiments through studying the drawings, the open contents, and the claims. These improvements and variations should also be included in the protection scope of the present invention.

In the claims, the words "comprise" and "include" does not exclude other component(s) or step(s). The term "a" or "one" does not exclude multiplicity. A single unit can implement a number of function(s) stated in the claims. Only stating measure(s) as fact(s) in mutually different dependent claims does not indicate that the combinations of these measures cannot be beneficially utilized.

## Claims

1. A method for authenticating user identity, comprising the following steps:
transmitting from a user terminal to an authentication front-end computer system an authentication instruction comprising an authentication message; and
transmitting from the authentication front-end computer system to a specific authentication server an authentication request comprising the authentication message; or
transmitting from a user terminal to a specific authentication server an authentication request comprising an authentication message, and
authenticating, by the authentication server, a user identity according to the authentication message.

2. The method according to claim 1, further comprising:
transmitting, by the authentication server, an authentication result to the authentication front-end computer system, and/or transmitting, by the authentication server, the authentication result to the user terminal directly or through the authentication front-end computer system as an intermediate node.

3. The method according to claim 1, wherein the authentication instruction comprises the identifier of the specific authentication server in order to identify the specific authentication server.

4. The method according to claim 1, further comprising:
before transmitting the authentication message, encrypting the authentication message by the user terminal;
having pre-registered in the authentication server a decryption key for decrypting the encrypted authentication message; and
after receiving the authentication message, conducting an authentication message decryption process by the authentication server,
wherein the authentication message decryption process comprises using the decryption key to decrypt the authentication message.

5. The method according to claim 1, wherein the authentication message further comprises a user identifier for identifying a user whose identity is to be authenticated, and the method further comprising:
before transmitting the authentication message, encrypting by the user terminal one or more parts of the authentication message other than the user identifier,
one or more user identifiers, and one or more decryption keys for decrypting the encrypted part/parts of at least one of the authentication message/messages having been associated with each other and pre-registered in the authentication server; and
after receiving the authentication message, conducting by the authentication server an authentication message decryption process,
wherein the authentication message decryption process comprises:
based on the received user identifier, searching the authentication server for the corresponding decryption key used for decryption, and
wherein if the search fails, the authentication fails, or
if the search succeeds, the encrypted part/parts of the authentication message is/are decrypted using the decryption key so retrieved.

6. The method according to claim 1, further comprising:
before said transmitting the authentication message, generating by the user terminal a digital signature using a private key and incorporating said digital signature into the authentication message, wherein the digital signature is for verifying data integrity of one or more parts of the authentication message other than the digital signature;
having pre-registered in the authentication server a public key for verifying data integrity of the part/parts of the authentication message other than the digital signature;
after receiving the authentication message, verifying by the authentication server data integrity of the part/parts of the authentication message other than the digital signature using the public key and the received digital signature,
wherein if it is verified that the data integrity is not maintained, the authentication fails, or
if it is verified that the data integrity is maintained, time verification step/steps and/or duplication verification step/steps and/or rolling code verification step/steps is/are conducted.

7. The method according to claim 1, wherein the authentication message further comprises a user identifier for identifying the user whose identity is to be authenticated, and the method further comprising:
before said transmitting the authentication message, generating by the user terminal a digital signature using a private key and incorporating said digital signature into the authentication message, wherein the digital signature is for verifying data integrity of part/parts of the authentication message other than the digital signature or the part/parts of the authentication message other than the digital signature and the user identifier;
having associated with each other and pre-registered in the authentication server a user identifier/identifiers and a public key/keys for verifying data integrity of the part/parts of an authentication message/messages other than a digital signature/signatures or the part/ parts of an authentication message/messages other than a digital signature/signatures and a user identifier/identifiers;
after receiving the authentication message, searching the authentication server by itself for the corresponding public key for verification based on the received user identifier,
wherein if the search fails, the authentication fails, or
if the search succeeds, the method further comprises:
verifying by the authentication server data integrity of the part/parts of the authentication message other than the digital signature or the part/parts of the authentication message other than the digital signature and the user identifier using the public key so retrieved and the received digital signature,
wherein if it is verified that the data integrity is not maintained, the authentication fails, or
if it is verified that the data integrity is maintained, time verification step/steps and/or duplication verification step/steps and/or rolling code verification step/steps is/are conducted.

8. The method according to claim 4 or 5, wherein each encryption key for said encrypting comprises a first part and/or a second part, wherein the first part is pre-stored in the user terminal, and the second part is information or a hash of information inputted into the user terminal by the user before the user terminal conducts encryption.

9. The method according to claim 6 or 7, wherein each private key for generating said digital signature comprises a first part and/or a second part, wherein the first part is pre-stored in the user terminal, and the second part is information or a hash of information inputted into the user terminal by the user before the user terminal generates the digital signature.

10. The method according to claim 4 or 5, further comprising:
before said encrypting, incorporating by the user terminal time of generation of the authentication message into the authentication message.

11. The method according to claim 10, wherein after conducting the authentication message decryption process, the method further comprises:
comparing by the authentication server the time incorporated into the authentication message with the current time in the authentication server,
wherein if the time difference is greater than a predetermined threshold, the authentication fails, or
if the time difference is not greater than the predetermined threshold, the authentication succeeds.

12. The method according to claim 6 or 7, further comprising:
before said generating the digital signature, incorporating by the user terminal time of generation of the authentication message into the authentication message.

13. The method according to claim 12, wherein the time verification step/steps comprise:
comparing by the authentication server the time incorporated into the authentication message with the current time in the authentication server,
wherein if the time difference is greater than a predetermined threshold, the authentication fails, or
if the time difference is not greater than the predetermined threshold, the authentication succeeds.

14. The method according to claim 10, further comprising:
storing by the authentication server the authentication message in the authentication request received each time;
after conducting the authentication message decryption process, comparing by the authentication server the authentication message/messages previously received with the authentication message currently received,
wherein if at least one of the authentication message/messages previously received is identical to the authentication message currently received, the authentication fails, or
if none of the authentication message/messages previously received is identical to the authentication message currently received, the authentication succeeds.

15. The method according to claim 12, further comprising:
storing by the authentication server the authentication message in the authentication request received each time;
and the duplication verification step/steps comprising:
comparing by the authentication server the authentication message/messages previously received with the authentication message currently received,
wherein if at least one of the authentication message/messages previously received is identical to the authentication message currently received, the authentication fails, or
if none of the authentication message/messages previously received is identical to the authentication message currently received, the authentication succeeds.

16. The method according to claim 10, further comprising:
storing by the authentication server the authentication message in the authentication request received each time;
after conducting the authentication message decryption process, comparing by the authentication server the time incorporated into the authentication message with the current time in the authentication server,
wherein if the time difference is greater than a predetermined threshold, the authentication fails, or
if the time difference is not greater than the predetermined threshold, the authentication server compares the authentication message/messages previously received with the authentication message currently received, and
wherein if at least one of the authentication message/messages previously received is identical to the authentication message currently received, the authentication fails, or
if none of the authentication message/messages previously received is identical to the authentication message currently received, the authentication succeeds.

17. The method according to claim 12, further comprising:
storing by the authentication server the authentication message in the authentication request received each time,
and the time verification step/steps comprising:
comparing by the authentication server the time incorporated into the authentication message with the current time in the authentication server,
wherein if the time difference is greater than a predetermined threshold, the authentication fails, or
if the time difference is not greater than the predetermined threshold, the duplication verification step/steps is/are conducted,
wherein the duplication verification step/steps comprise:
comparing by the authentication server the authentication message/messages previously received with the authentication message currently received,
wherein if at least one of the authentication message/messages previously received is identical to the authentication message currently received, the authentication fails, or
if none of the authentication message/messages previously received is identical to the authentication message currently received, the authentication succeeds.

18. The method according to claim 10 or 12, wherein the user terminal generates the authentication message at predetermined intervals until receiving the user's command to transmit the authentication instruction comprising the most recently generated authentication message to the authentication front-end computer system or transmit the authentication request comprising the most recently generated authentication message to the authentication server, wherein the authentication message generated each time comprises the time of generation of the corresponding authentication message.

19. The method according to claim 16 or 17, wherein a stored authentication message is deleted from the authentication server when the time incorporated into the corresponding authentication message stored in the authentication server is earlier than the current time in the authentication server by more than the predetermined threshold.

20. The method according to claim 4 or 5, further comprising:
before encrypting, incorporating by the user terminal a rolling code into the authentication message;
after conducting the authentication message decryption process, comparing by the authentication server the rolling code incorporated into the authentication message with the corresponding rolling code/codes generated by the authentication server,
wherein if the rolling code incorporated into the authentication message is not equal to any of the corresponding rolling code/codes generated by the authentication server, the authentication fails, or
if the rolling code incorporated into the authentication message is equal to at least one of the corresponding rolling code/codes generated by the authentication server, the authentication succeeds.

21. The method according to claim 6 or 7, further comprising:
before generating the digital signature, incorporating by the user terminal a rolling code into the authentication message,
and the rolling code verification step/steps comprising:
comparing by the authentication server the rolling code incorporated into the authentication message with the corresponding rolling code/codes generated by the authentication server,
wherein if the rolling code incorporated into the authentication message is not equal to any of the corresponding rolling code/codes generated by the authentication server, the authentication fails, or
if the rolling code incorporated into the authentication message is equal to at least one of the corresponding rolling code/codes generated by the authentication server, the authentication succeeds.

22. The method according to claim 1, further comprising:
incorporating by the user terminal a rolling code into the authentication message,
after receiving the authentication message, comparing by the authentication server the rolling code incorporated into the authentication message with the corresponding rolling code/codes generated by the authentication server,
if the rolling code incorporated into the authentication message is not equal to any of the corresponding rolling code/codes generated by the authentication server, the authentication fails, or
if the rolling code incorporated into the authentication message is equal to at least one of the corresponding rolling code/codes generated by the authentication server, the authentication succeeds.

23. The method according to claim 1, wherein the authentication message further comprises a user identifier for identifying the user whose identity is to be authenticated, and user identity information according to which the user's identity can be authenticated, and the method further comprising:
incorporating by the user terminal the user identity information into the authentication message;
having associated with each other a user identifier/identifiers and user identity information and pre-registering thereof in the authentication server;
after receiving the authentication message, searching the authentication server by itself for the corresponding user identity information based on the received user identifier; and
comparing the user identity information so retrieved with the received user identity information, wherein if at least one piece of user identity information so retrieved is identical to the received user identity information, the authentication succeeds, otherwise, the authentication fails.

24. The method according to claim 11 or 13 or 14 or 15 or 16 or 17 or 20 or 21 or 22 or 23, further comprising:
if the authentication succeeds, paying by the authentication server a specific amount from a specific user payment account to a specific operator account.

25. The method according to claim 24, wherein the authentication message further comprises user identity information, said user identity information further comprising a user payment account identifier for identifying the specific user payment account.

26. The method according to claim 24, further comprising:
pre-registering a user payment account identifier in the authentication server; and
after currently receiving the authentication message, using the user payment account identifier to identify the specific user payment account by the authentication server.

27. The method according to claim 24, wherein the authentication message further comprises a user identifier for identifying the user whose identity is to be authenticated, and the method further comprising:
having associated with each other a user identifier/identifiers and a user payment account identifier/identifiers and pre-registering thereof in the authentication server; and
after currently receiving the authentication message, searching the authentication server by itself for the corresponding user payment account identifier which is for identifying the specific user payment account based on the received user identifier.

28. The method according to claim 24, wherein the authentication message or authentication request further comprises an operator account identifier for identifying the specific operator account.

29. The method according to claim 24, wherein the authentication message or authentication request further comprises an operator identifier, and the method further comprising:
having associated with each other an operator identifier/identifiers and an operator account identifier/identifiers and pre-registering thereof in the authentication server; and
after currently receiving the authentication request, searching the authentication server by itself for the corresponding operator account identifier which is for identifying the specific operator account based on the operator identifier currently received.

30. The method according to claim 24, further comprising:
pre-registering an operator account identifier in the authentication server; and
after currently receiving the authentication request, using the operator account identifier to identify the specific operator account by the authentication server.

31. The method according to claim 24, wherein the authentication message or authentication request further comprises an amount which is the specific amount.

32. The method according to claim 24, wherein the authentication message further comprises a user identifier for identifying the user whose identity is to be authenticated, and the method further comprising:
having associated with each other a user identifier/identifiers and an amount/amounts and pre-registering thereof in the authentication server; and
after currently receiving the authentication message, searching the authentication server by itself for the corresponding amount based on the user identifier currently received, wherein the amount so retrieved is the specific amount.

33. The method according to claim 24, further comprising:
pre-registering an amount in the authentication server,
wherein the amount so registered in the authentication server is the specific amount.

34. The method according to claim 28, further comprising:
before transmitting the authentication message from the user terminal to the authentication front-end computer system or the authentication server, displaying by the authentication front-end computer system the operator account identifier in a textual and/or machine-readable format; and
reading by the user or the user terminal the operator account identifier, which is to be incorporated into the authentication message.

35. The method according to claim 29, further comprising:
before transmitting the authentication message from the user terminal to the authentication front-end computer system or the authentication server, displaying by the authentication front-end computer system the operator identifier in a textual and/or machine-readable format; and
reading by the user or the user terminal the operator identifier in order to be incorporated into the authentication message.

36. The method according to claim 31, further comprising:
before transmitting the authentication message from the user terminal to the authentication front-end computer system or the authentication server, displaying by the authentication front-end computer system in a textual and/or machine-readable format the amount to be incorporated into the authentication message; and
reading by the user or the user terminal the amount to be incorporated into the authentication message in order to incorporate thereof into the authentication message.

37. The method according to claim 1, wherein the authentication message further comprises user identity information, and the user identity information comprises a ticket identifier for identifying at least one ticket to be exercised by the user.

38. The method according to any one of claims 1-37, wherein said transmitting the authentication instruction from the user terminal to the authentication front-end computer system comprises:
displaying by the user terminal the authentication instruction in a textual and/or machine-readable format; and
reading by the authentication front-end computer system the textual and/or machine-readable format of the authentication instruction to obtain the authentication instruction.

39. The method according to any one of claims 1-37, wherein said transmitting the authentication instruction from the user terminal to the authentication front-end computer system comprises:
displaying by the user terminal the authentication instruction in a textual format; and
inputting by the user the text of the authentication instruction into the authentication front-end computer system.

40. A user terminal comprising:
an authentication message generator for generating an authentication message/messages; and
a transmitting device for transmitting an authentication instruction/instructions comprising the authentication message/messages to an authentication front-end computer system/systems or for transmitting an authentication request/requests comprising the authentication message/messages to an authentication server/servers.

41. The user terminal according to claim 40, further comprising:
a memory for storing a user identifier/identifiers, user identity information, an identifier/identifiers of an authentication server/servers, an encryption key/keys or part/parts of the encryption key/keys for encryption, a private key/keys or part/parts of the private key/keys for generation of a digital signature/signatures, a user payment account identifier/identifiers, and/or a ticket identifier/identifiers.

42. The user terminal according to claim 41, wherein the authentication message generator further incorporates the user identifier into the authentication message for identifying the user whose identity is to be authenticated.

43. The user terminal according to claim 41, wherein the authentication message generator further incorporates the user identity information into the authentication message for authenticating the user's identity according to the user identity information or for incorporating a user payment account identifier or a ticket identifier into the user identity information, the user payment account identifier being used to identify the user payment account in turn used by the user for payment, and the ticket identifier being used to identify at least one ticket to be exercised by the user.

44. The user terminal according to claim 41, wherein the authentication instruction or authentication request transmitted by the transmitting device further comprises the authentication server's identifier for identifying the authentication server in order to authenticate the user's identity.

45. The user terminal according to claim 40, further comprising:
a real-time clock for generating real time to be incorporated into the authentication message/messages.

46. The user terminal according to claim 45, wherein the authentication message generator of the user terminal generates authentication messages at predetermined intervals until the user terminal receives the user's command to transmit the authentication instruction comprising the most recently generated authentication message to the authentication front-end computer system, wherein the authentication message generated each time comprises time of generation of the corresponding authentication message;
after receiving the command to transmit the authentication instruction, the transmitting device of the user terminal transmits the authentication instruction comprising the most recently generated authentication message to the authentication front-end computer system.

47. The user terminal according to claim 45, wherein the authentication message generator of the user terminal generates authentication messages at predetermined intervals until the user terminal receives the user's command to transmit the authentication request comprising the most recently generated authentication message to the authentication server, wherein the authentication message generated each time comprises time of generation of the corresponding authentication message; after receiving the command to transmit the authentication request, the transmitting device of the user terminal transmits the authentication request comprising the most recently generated authentication message to the authentication server.

48. The user terminal according to claim 40, further comprising:
a rolling code generator for generating a rolling code/codes to be incorporated into the authentication message/messages.

49. The user terminal according to claim 40, further comprising:
a user interface wherein the user inputs or chooses through the user interface a user identifier/identifiers to be incorporated into the authentication message/messages, and/or the user inputs or chooses through the user interface a user payment account identifier/identifiers or a ticket identifier/identifiers to be incorporated into the user identity information in the authentication message/messages, and/or the user inputs or chooses through the user interface an operator account identifier/identifiers or an operator identifier/identifiers to be incorporated into the authentication message/messages, and/or the user inputs or chooses through the user interface an amount/amounts to be incorporated into the authentication message/messages, and/or the user inputs or chooses through the user interface an authentication server's identifier/identifiers to be incorporated into the authentication instruction/instructions or the authentication request/requests, and/or the user inputs through the user interface an encryption key/keys or part/parts of the encryption key/keys for encryption, and/or the user inputs through the user interface a private key/keys or part/parts of the private key/keys for generation of a digital signature/signatures; and/or the user inputs through the user interface a command/commands to transmit the authentication instruction/instructions or authentication request/requests.

50. The user terminal according to claim 49, wherein the authentication message generator further incorporates the user identifier, the user identity information, the operator account identifier or the operator identifier, and/or the amount into the authentication message,
the user identifier being used to identify the user whose identity is to be authenticated;
the user identity information comprising the user payment account identifier or the ticket identifier;
the user payment account identifier being used to identify the user payment account used by the user to pay;
the ticket identifier being used to identify at least one ticket to be exercised by the user;
the operator account identifier being used to identify the operator account of the operator receiving the user's payment; and
the operator identifier being used to identify the operator receiving the user's payment.

51. The user terminal according to claim 49, wherein the authentication instruction or authentication request transmitted by the transmitting device further comprises the authentication server's identifier for identifying the authentication server in order to authenticate user identity.

52. The user terminal according to claim 40, wherein the authentication message generator further comprises:
an encryption unit for utilizing an encryption key/keys to encrypt the authentication message/messages to be transmitted.

53. The user terminal according to claim 40, wherein the authentication message generator further incorporates a user identifier into the authentication message for identifying the user whose identity is to be authenticated, and the authentication message generator further comprises:
an encryption unit for utilizing at least one encryption key to encrypt the part/parts of the authentication message/messages to be transmitted other than the user identifier/identifiers.

54. The user terminal according to claim 40, wherein the authentication message generator further comprises:
a digital signature generator for utilizing a private key/keys to generate a digital signature/signatures, wherein the digital signature/signatures is/are to be incorporated into the authentication message/messages, and the digital signature/signatures is/are used to verify data integrity of the part/parts of the authentication message/messages other than the digital signature/signatures.

55. The user terminal according to claim 40, wherein the authentication message generator further incorporates a user identifier into the authentication message for identifying the user whose identity is to be authenticated, and the authentication message generator further comprises:
a digital signature generator for utilizing at least one private key to generate at least one digital signature wherein the digital signature is to be incorporated into the authentication message, and the digital signature is used to verify data integrity of the part/parts of the authentication message other than the digital signature or other than the digital signature and the user identifier.

56. The user terminal according to claim 52 or 53, further comprising a memory and/or a user interface, wherein the encryption key comprises a first part and/or a second part, and wherein the first part is pre-stored in the memory; and the second part is information or a hash of the information inputted through the user interface into the user terminal by the user before the encryption unit performs encryption.

57. The user terminal according to claim 54 or 55, further comprising a memory and/or a user interface, wherein the private key comprises a first part and/or a second part, and wherein the first part is pre-stored in the memory, and the second part is information or a hash of the information inputted through the user interface into the user terminal by the user before the digital signature generator generates the digital signature.

58. The user terminal according to claim 56, further comprising:
a hash generator for generating the hash from the information inputted through the user interface into the user terminal by the user.

59. The user terminal according to claim 57, further comprising:
a hash generator for generating the hash from the information inputted through the user interface into the user terminal by the user.

60. The user terminal according to any one of claims 40-59, wherein the transmitting device comprises:
a display unit for displaying in a textual and/or machine-readable format/formats the authentication instruction/instructions comprising the authentication message/messages, which is/are to be read by the authentication front-end computer system.

61. The user terminal according to any one of claims 40-59, wherein the transmitting device comprises:
a non-contact communication transmitter for transmitting the authentication instruction/instructions comprising the authentication message/messages to the authentication front-end computer system through non-contact communication.

62. The user terminal according to any one of claims 40-59, further comprising:
a receiver for directly receiving or using the authentication front-end computer system as an intermediate node to receive an authentication result/results from the authentication server.

63. An authentication server comprising:
a receiver for receiving an authentication request/requests comprising an authentication message/messages from an authentication front-end computer system or a user terminal; and
an authentication unit for authenticating a user's/users' identity/identities according to the authentication message/messages.

64. The authentication server according to claim 63, further comprising:
a transmitter for transmitting an authentication result/results of the authentication unit to the authentication front-end computer system, and/or for directly transmitting or using the authentication front-end computer system as an intermediate node to transmit the authentication result/results to the user terminal.

65. The authentication server according to claim 63, wherein the authentication message is encrypted, the authentication server further comprises a memory for pre-storing at least one decryption key for decrypting the encrypted authentication message, and
the authentication unit further comprises a decryption unit for utilizing the at least one decryption key to decrypt the encrypted authentication message.

66. The authentication server according to claim 63, wherein the authentication message further comprises a user identifier for identifying a user whose identity is to be authenticated, and the part/parts of the authentication message other than the user identifier is/are encrypted, and the authentication server further comprises:
a memory for pre-storing a user identifier/identifiers and the corresponding decryption key/keys which is/are for decrypting the encrypted part/parts of an authentication message/messages, and the authentication unit further comprises:
a search unit for searching the memory for the corresponding decryption key/keys for decryption based on the user identifier in the received authentication message; and
a decryption unit for utilizing the decryption key/keys so retrieved to decrypt the encrypted part/parts of the received authentication message.

67. The authentication server according to claim 63, wherein the authentication message further comprises a digital signature, and the authentication server further comprises:
a memory for pre-storing a public key for verifying data integrity of the part/parts of the authentication message/messages other than the digital signature/signatures, and the authentication unit further comprises:
a verification unit for utilizing the public key and the digital signature/signatures to verify data integrity of the part/parts of the authentication message/messages other than the digital signature/signatures,
wherein if it is verified that the data integrity is not maintained, the authentication fails, or
if it is verified that the data integrity is maintained, the authentication server conducts time verification step/steps and/or duplication verification step/steps and/or rolling code verification step/steps.

68. The authentication server according to claim 63, wherein the authentication message further comprises a user identifier for identifying a user whose identity is to be authenticated, and a digital signature,
and the authentication server further comprises a memory for pre-storing a user identifier/identifiers and the corresponding public key/keys which is/are for verifying data integrity of the part/parts of an authentication message/messages other than a digital signature/signatures or the part/parts of an authentication message/messages other than a digital signature/signatures and a user identifier/identifiers,
and the authentication unit further comprises:
a search unit for searching the memory for the corresponding public key/keys for verification based on the user identifier in the authentication message, and
a verification unit for utilizing the public key/keys so retrieved and the digital signature to verify data integrity of the part/parts of the authentication message other than the digital signature or the part/parts of the authentication message other than the digital signature and the user identifier,
wherein if it is verified that the data integrity is not maintained, the authentication fails, or
if it is verified that the data integrity is maintained, the authentication server conducts time verification step/steps and/or duplication verification step/steps and/or rolling code verification step/steps.

69. The authentication server according to claim 63, wherein the authentication message further comprises time of generation of the authentication message, and the authentication server further comprises a real-time clock for generating real time,
and the authentication unit further comprises a comparison unit for comparing the time in the authentication message with the current real time generated by the real-time clock,
wherein if the time difference is greater than a predetermined threshold, the authentication fails, or if the time difference is not greater than the predetermined threshold, the authentication succeeds.

70. The authentication server according to claim 63, wherein the authentication message further comprises time of generation of the authentication message, and the authentication server further comprises a memory for storing the authentication message in the authentication request received each time,
and the authentication unit further comprises a comparison unit for comparing the authentication message/messages received previously and stored in the memory with the authentication message in the authentication request currently received,
wherein if at least one of the authentication message/messages previously received is identical to the authentication message currently received, the authentication fails, or
if none of the authentication message/messages previously received is identical to the authentication message currently received, the authentication succeeds.

71. The authentication server according to claim 63, wherein the authentication message further comprises time of generation of the authentication message, and the authentication server further comprises:
a real-time clock for generating real time, and
a memory for storing the authentication message in the authentication request received each time, and the authentication unit further comprises a comparison unit for comparing the time in the authentication message currently received with the current real time generated by the real-time clock,
wherein if the time difference is greater than a predetermined threshold, the authentication fails, or
if the time difference is not greater than the predetermined threshold, the comparison unit is further used to compare the authentication message/messages received previously and stored in the memory with the authentication message in the authentication request currently received,
wherein if at least one of the authentication message/messages previously received is identical to the authentication message currently received, the authentication fails, or
if none of the authentication message/messages previously received is identical to the authentication message currently received, the authentication succeeds.

72. The authentication server according to claim 71, wherein an authentication message stored in the memory is deleted from the memory when the time comprised by the authentication message is earlier than the current real time generated by the real-time clock by more than the predetermined threshold.

73. The authentication server according to claim 63, wherein the authentication message further comprises a rolling code, and the authentication server further comprises:
a rolling code generator for generating a rolling code/codes,
the authentication unit further comprises:
a comparison unit for comparing the rolling code in the authentication message with the corresponding rolling code/codes generated by the rolling code generator,
wherein if the rolling code in the authentication message is not equal to any corresponding rolling code/codes generated by the rolling code generator, the authentication fails, or
if the rolling code in the authentication message is equal to at least one corresponding rolling code generated by the rolling code generator, the authentication succeeds.

74. The authentication server according to claim 63, wherein the authentication message further comprises a user identifier for identifying a user whose identity is to be authenticated, and user identity information for authenticating a user's identity according to the user identity information, and the authentication server further comprises a memory for pre-storing a user identifier/identifiers and the corresponding user identity information,
and the authentication unit further comprises:
a search unit for searching the memory for the corresponding user identity information based on the user identifier in the authentication message, and
a comparison unit for comparing the user identity information so retrieved with the user identity information in the authentication message,
wherein if at least one piece of user identity information so retrieved is identical to the user identity information in the authentication message, the authentication succeeds, or
otherwise, the authentication fails.

75. The authentication server according to claim 70 or 71, wherein if the authentication succeeds, the authentication unit is further used to pay a specific amount from a specific user payment account to a specific operator account.

76. The authentication server according to claim 74, wherein if the authentication succeeds, the authentication unit is further used to pay a specific amount from a specific user payment account to a specific operator account.

77. The authentication server according to claim 69 or 73, wherein if the authentication succeeds, the authentication unit is further used to pay a specific amount from a specific user payment account to a specific operator account.

78. The authentication server according to claim 75 or 76 or 77, wherein the authentication message currently received further comprises user identity information wherein the user identity information comprises the user payment account identifier that is used to identify the specific user payment account.

79. The authentication server according to claim 75 or 76, wherein the memory is further used to pre-store the user payment account identifier that is used to identify the specific user payment account.

80. The authentication server according to claim 77, further comprising a memory for pre-storing the user payment account identifier that is used to identify the specific user payment account.

81. The authentication server according to claim 75, wherein the authentication message currently received further comprises a user identifier for identifying the user whose identity is to be authenticated, and the memory is further used to pre-store user identifier/identifiers and the corresponding user payment account identifier/identifiers, and the authentication unit further comprises a search unit for searching the memory for the corresponding user payment account identifier that is used to identify the specific user payment account based on the user identifier in the authentication message currently received.

82. The authentication server according to claim 76, wherein the authentication message currently received further comprises a user identifier for identifying the user whose identity is to be authenticated, and the memory is further used to pre-store a user identifier/identifiers and the corresponding user payment account identifier/identifiers, and the search unit is further used to search the memory for the corresponding user payment account identifier that is used to identify the specific user payment account based on the user identifier in the authentication message currently received.

83. The authentication server according to claim 77, wherein the authentication message currently received further comprises a user identifier for identifying the user whose identity is to be authenticated, and the authentication server further comprises:
a memory for pre-storing a user identifier/identifiers and the corresponding user payment account identifier/identifiers, and
the authentication unit further comprises a search unit for searching the memory for the corresponding user payment account identifier that is used to identify the specific user payment account based on the user identifier in the authentication message currently received.

84. The authentication server according to claim 75 or 76 or 77, wherein the authentication message or authentication request currently received further comprises the operator account identifier that is used to identify the specific operator account.

85. The authentication server according to claim 75 or 76, wherein the memory is further used to pre-store the operator account identifier that is used to identify the specific operator account.

86. The authentication server according to claim 77, further comprising a memory for pre-storing the operator account identifier that is used to identify the specific operator account.

87. The authentication server according to claim 75, wherein the authentication message or authentication request currently received further comprises an operator identifier, and the memory is further used to pre-store an operator identifier/identifiers and the corresponding operator account identifier/identifiers,
and the authentication unit further comprises:
a search unit for searching the memory for the corresponding operator account identifier that is used to identify the specific operator account based on the operator identifier in the authentication message or authentication request currently received.

88. The authentication server according to claim 76, wherein the authentication message or authentication request currently received further comprises an operator identifier, and the memory is further used to pre-store an operator identifier/identifiers and the corresponding operator account identifier/identifiers, and the search unit is further used to search the memory for the corresponding operator account identifier that is used to identify the specific operator account based on the operator identifier in the authentication message or authentication request currently received.

89. The authentication server according to claim 77, wherein the authentication message or authentication request currently received further comprises an operator identifier, and the authentication server further comprises a memory for pre-storing an operator identifier/identifiers and the corresponding operator account identifier/identifiers,
and the authentication unit further comprises a search unit for searching the memory for the corresponding operator account identifier that is used to identify the specific operator account, based on the operator identifier in the authentication message or authentication request currently received.

90. The authentication server according to claim 75 or 76 or 77, wherein the authentication message or authentication request currently received further comprises an amount wherein the amount in the authentication message or authentication request currently received is the specific amount.

91. The authentication server according to claim 75 or 76, wherein the memory is further used to pre-store an amount, and the amount stored in the memory is the specific amount.

92. The authentication server according to claim 77, further comprising:
a memory for pre-storing an amount, and the amount stored in the memory is the specific amount.

93. The authentication server according to claim 75, wherein the authentication message currently received further comprises a user identifier for identifying the user whose identity is to be authenticated, and the memory is further used to pre-store user identifier/identifiers and the corresponding amount/amounts, and the authentication unit further comprises a search unit for searching the memory for the corresponding amount, based on the user identifier in the authentication message currently received, and the amount so retrieved is the specific amount.

94. The authentication server according to claim 76, wherein the authentication message currently received further comprises a user identifier for identifying the user whose identity is to be authenticated, and the memory is further used to pre-store a user identifier/identifiers and the corresponding amount/amounts, and the search unit is further used to search the memory for the corresponding amount based on the user identifier in the authentication message currently received, and the amount so retrieved is the specific amount.

95. The authentication server according to claim 77, wherein the authentication message currently received further comprises a user identifier for identifying the user whose identity is to be authenticated, and the authentication server further comprises a memory for pre-storing a user identifier/identifiers and the corresponding amount/amounts,
and the authentication unit further comprises a search unit for searching the memory for the corresponding amount based on the user identifier in the authentication message currently received, and the amount so retrieved is the specific amount.

96. The authentication server according to claim 63, wherein the authentication message further comprises user identity information, and the user identity information comprises a ticket identifier for identifying at least one ticket to be exercised by a user.

97. An authentication front-end computer system comprising:
an authentication request generator for generating an authentication request/requests comprising an authentication message/messages;
a transmitter for transmitting the authentication request/requests to a specific authentication server; and
a receiver for receiving an authentication instruction/instructions comprising the authentication message/messages from a user terminal.

98. The authentication front-end computer system according to claim 97, wherein the receiver is further used to receive an authentication result/results from the authentication server.

99. The authentication front-end computer system according to claim 97, further comprising a memory for storing an authentication server's identifier, an operator account identifier or an operator identifier, and/or an amount.

100. The authentication front-end computer system according to claim 99, wherein the authentication request generator further incorporates the operator account identifier or operator identifier stored in the memory and/or the amount stored in the memory into the authentication request, wherein the operator account identifier is used to identify an operator account of the operator to receive user payment, and the operator identifier is used to identify the operator to receive user payment.

101. The authentication front-end computer system according to claim 99, wherein the authentication server's identifier stored in the memory is used to identify the specific authentication server.

102. The authentication front-end computer system according to any one of claims 97-101, wherein the receiver further comprises a reader for reading the authentication instruction/instructions comprising the authentication message/messages, and wherein the authentication instruction/instructions is/are displayed on the user terminal in a textual and/or machine-readable format/formats.

103. The authentication front-end computer system according to any one of claims 97-101, further comprising a user interface, wherein the user inputs an authentication instruction/instructions comprising an authentication message/messages into the authentication front-end computer system through the user interface, and wherein the authentication instruction/instructions is/are displayed on a user terminal in a textual format/formats.

104. The authentication front-end computer system according to any one of claims 97-101, wherein the receiver further comprises a non-contact communication receiver for receiving the authentication instruction/instructions comprising the authentication message/messages from the user terminal through non-contact communication.

105. The authentication front-end computer system according to claim 97, wherein the authentication instruction further comprises the identifier of the authentication server for authenticating user identity, and wherein the identifier is used to identify the specific authentication server.

106. The authentication front-end computer system according to claim 98, wherein the transmitter further transmits to the user terminal the authentication result received by the receiver from the authentication server.

107. A system for authenticating user identity comprising:
the user terminal according to any one of claims 40-62,
the authentication server according to any one of claims 63-96, and
the authentication front-end computer system according to any one of claims 97-106.
